# EUROPEAN PATENT SPECIFICATION

(11) **EP 3 400 688 B1**
(45) Date of publication and mention of the grant of the patent: **20.05.2020**
(21) Application number: 17701610.2
(22) Date of filing: 04.01.2017
(51) Int. Cl.: G06F 13/36, G06F 13/40, H04L 12/933

(54) **MASSIVELY PARALLEL COMPUTER, ACCELERATED COMPUTING CLUSTERS, AND TWO DIMENSIONAL ROUTER AND INTERCONNECTION NETWORK FOR FIELD PROGRAMMABLE GATE ARRAYS, AND APPLICATIONS**
MASSIV-PARALLELER COMPUTER, BESCHLEUNIGTE COMPUTERCLUSTER UND ZWEIDIMENSIONALER ROUTER UND VERBINDUNGSNETZWERK FÜR FELDPROGRAMMIERBARE GATE-ARRAYS UND ANWENDUNGEN
ORDINATEUR MASSIVEMENT PARALLÈLE, GRAPPES INFORMATIQUES ACCÉLÉRÉES, ET ROUTEUR BIDIMENSIONNEL ET RÉSEAU D'INTERCONNEXION POUR RÉSEAUX PRÉDIFFUSÉS PROGRAMMABLES PAR L'UTILISATEUR, ET APPLICATIONS

(30) Priority: 04.01.2016 US 201662274745 P; 11.03.2016 US 201662307330 P
(43) Date of publication of application: 14.11.2018
(73) Proprietor: Gray Research LLC, Bellevue, Washington 98005 (US)
(72) Inventor: GRAY, Jan Stephen, Bellevue, Washington 98005 (US)
(74) Representative: Pezzoli, Ennio
(86) International application number: PCT/US2017/012230
(87) International publication number: WO 2017/120270

(56) References cited:
- US-A1- 2013 160 026
- US-B1- 8 631 205

## Description

### CROSS-RELATED APPLICATIONS / PRIORITY CLAIM

### Technical Field

The present disclosure relates generally to electronic circuits, and relates more specifically to, e.g., parallel computer design, parallel programming models and systems, interconnection-network design, field programmable gate array (FPGA) design, computer architecture, and electronic design automation tools.

### Description of the Related Art

The present disclosure pertains to the design and implementation of massively parallel computing systems. In an embodiment the system is implemented in a system on a chip. In an embodiment the system is implemented in an FPGA. The system employs a network-on-chip ("NOC") interconnection to compose a plurality of processor cores, accelerator cores, memory systems, diverse external devices and interfaces, and hierarchical clusters of processor cores, accelerator cores, memory systems, and diverse external devices and systems together.

To date, prior art work on FPGA system-on-a-chip (SOC) computing systems that comprise a plurality of processor cores has produced relatively large, complex, and slow parallel computers. Prior art systems employ large soft processor cores, large interconnect structures, and unscalable interconnect networks such as buses and rings.

In contrast, an embodiment of the present work, employing a particularly efficient, scalable high bandwidth network on a chip (NOC) designated a "Hoplite NOC" and comprising FPGA-efficient, directional 2D routers designated "Hoplite routers", particularly efficient FPGA soft processor cores, and an efficient, flexible, configurable architecture for composing processor cores, accelerator cores, and shared memories into clusters, and that communicate via means including direct coupling, cluster-shared memory, and message passing, achieves, comparatively, orders of magnitude greater computing throughput and data bandwidth, at lower energy per operation, implemented in a given FPGA.

US-B-8,631,205 describes a tiled parallel computer architecture with a bidirectional (not directional) 2D torus NOC comprising routers with 5-input, 5-output crossbar switches and bidirectional links (buses) between router switches.

US-A-2013/160026 describes a tiled parallel computer architecture with a bidirectional (not directional) 2D mesh (not torus) NOC comprising routers with 5-input, 5-output switches and bidirectional links (buses) between router switches.

### INTRODUCTION TO AN EMBODIMENT OF GRVI PHALANX MASSIVELY PARALLEL COMPUTER AND ACCELERATOR FRAMEWORK

In this Autumn of Moore's Law, the computing industry is challenged to scale up throughput and reduce energy. This drives interest in FPGA accelerators, particularly in datacenter servers. For example, the Microsoft Catapult system uses FPGA acceleration at datacenter scale to double throughput or cut latency of Bing query document ranking. [3]

As computers, FPGAs offer parallelism, specialization, and connectivity to modem interfaces including 10-100 Gb/s Ethernet and many DRAM channels including High Bandwidth Memory (HBM). Compared to general purpose CPUs, FPGA accelerators can achieve higher throughput, lower latency, and lower energy per operation.

There are at least two big challenges to development of an FPGA accelerator. The first is software: it is expensive to move an application into hardware, and to maintain it as code changes. Rewriting C++ code in Register Transfer Language (RTL) is painful. High level synthesis maps a C function to gates, but does not help compose modules into a system, nor interface the system to the host. OpenCL-to-FPGA tools are a step ahead. With OpenCL developers have a software platform that abstracts away low level FPGA concerns. But "OpenCL to FPGA" is no panacea. Much important software is not and cannot be coded in OpenCL; the resulting accelerator is specialized to particular kernel(s); and following a simple edit to the OpenCL program, it may take several hours to re-implement the FPGA through the FPGA synthesize, place, and route tool chain.

To address the diversity of workloads, and for faster design turns, more of a workload might be run directly as software, on processors in the FPGA fabric. Soft processors may also be very tightly coupled to accelerators, with very low latency communications between the processor and the accelerator function core. But to outperform a full custom CPU can require many energy-efficient, FPGA-efficient soft processors working in tandem with workload accelerators cores.

The second challenge is implementation of the accelerator SOC hardware. The SOC consists of dozens of compute and accelerator cores, interconnected to each other and to extreme bandwidth interface cores e.g. PCI Express, 100G Ethernet, and, in the coming HBM era, eight or more DRAM channels. Accordingly, an embodiment of a practical, scalable system should provide sufficient interconnect connectivity and bandwidth to interconnect the many compute and interface cores at full bandwidth (typically 50-150 Gb/s per client core).

### GRVI, AN FPGA-EFFICIENT SOFT PROCESSOR CORE

Actual *acceleration* of a software workload, *i.e.* running it faster or with greater aggregate throughput than is possible on a general purpose ASIC or full-custom CPU, motivates an FPGA-efficient soft processor that implements a standard instruction set architecture (ISA) for which the diversity of software tools, libraries, and applications exist. The RISC-V ISA is a good choice. It is an open ISA; it is modem; extensible; designed for a spectrum of use cases; and it has a comprehensive infrastructure of specifications, test suites, compilers, tools, simulators, libraries, operating systems, and processor and interface intellectual property (IP) cores. Its core ISA, RV32I, is a simple 32-bit integer RISC.

The present disclosure describes an FPGA-efficient implementation of the RISC-V RV32I instruction set architecture, called "GRVI". GRVI is an austere soft processor core that focuses on using as few hardware resources as possible, which enables more cores per die, which enables more compute and memory parallelism per integrated circuit (IC).

The design goal of the GRVI core was therefore to maximize millions of instructions per second per LUT-area-consumed (MIPS/LUT). This is achieved by eliding inessential logic from each CPU core. In one embodiment, infrequently used resources, such as shifter, multiplier, and byte/halfword load/store, are cut from the CPU core. Instead, they are shared by two or more cores in the cluster, so that their overall amortized cost is reduced, and in one embodiment, at least halved.

In one embodiment, the GRVI soft processor's microarchitecture is as follows. It is a two- or three-stage pipeline (optional instruction fetch; decode; execute) with a 2R/1W register file; two sets of operand multiplexers (operand selection and result forwarding) and registers; an arithmetic logic unit (ALU); a dedicated comparator for conditional branches and SLT (set less than); a program counter (PC) unit for I-fetch, jumps, and branches; and a result multiplexer to select a result from the ALU, return address, load data, optional shift and/or multiply.

In one embodiment, for GRVI, each LUT in the datapath was explicitly technology mapped (structurally instantiated) into FPGA 6-LUTs, and each LUT in the synthesized control unit was scrutinized. By careful technology mapping, including use of carry logic in the ALU, PC unit, and comparator, the core area and clock period may be significantly reduced.

GRVI is small and fast. In one embodiment, the datapath uses 250 LUTs and the core overall uses 320 LUTs, and it runs at up to 375 MHz in a Xilinx Kintex UltraScale (-2) FPGA. Its CPI (cycles per instruction) is approximately ∼1.3 (2 pipeline stage configuration) or ∼1.6 (3 pipeline stage configuration). Thus in this embodiment the efficiency figure of merit for the core is approximately 0.7 MIPS/LUT.

### CLUSTERS OF PROCESSOR CORES, ACCELERATOR CORES, AND LOCAL SHARED MEMORIES, AND ROUTERS, NOCS, AND MESSAGES

As a GRVI processor core (also herein called variously "processing core" or simply "PE" for processing element) is relatively compact, it is possible to implement many PEs per FPGA - 750 in one embodiment in a 240,000 LUT Xilinx Kintex UltraScale KU040. But besides PEs, a practical computing system also needs memories and interconnects. A KU040 has 600 dual-ported 1Kx36 BRAMs (block static random access memories) - one per 400 LUTs. How might all these cores and memories be organized into a useful, fast, easily programmed multiprocessor? It depends upon workloads and their parallel programming models. The present disclosure and embodiments, without limitation, particularly targets data parallel, task parallel, and process network parallel programs (SPMD (single program, multiple data) or MIMD (multi-instruction-stream, multiple data)) with relatively small compute kernels.

For system-wide data memory, it is expensive (inefficient in terms of hardware resources required) to build fast cache coherent shared memory for hundreds of cores. Also, caches consume resources better spent on computation. Thus in a preferred embodiment data caches are not required.

Another embodiment employs an uncached global shared memory design. Here BRAMs are grouped into 'memory segments' distributed about the FPGA; any PE or accelerator at any site on the FPGA may issue remote store and load requests, and load responses, which traverse an interconnect such as a NOC to and from the addressed memory segment. This is straightforward to build and program, but since if the PE is not memory latency tolerant, a non-local load instruction might stall the PE for 10-20 cycles or more as the load request and response traverse the interconnect and access the memory block. Thus in such embodiments, shared memory intensive workloads may execute more slowly than possible in other embodiments.

An embodiment, herein called a "Phalanx" architecture (so named for its resemblance to disciplined, cooperating arrays of troops in an ancient Greek military unit), partitions FPGA resources into small clusters of processors, accelerators, and a cluster-shared memory ("CRAM"), typically of 4 KB to 1 MB in size. Within a cluster, CRAM accesses by processor cores or accelerator cores have fixed low latency of a few cycles, and, assuming a workload's data can be subdivided into CRAM-sized working sets, memory intensive workloads may execute, in aggregate, relatively quickly.

In an embodiment targeting the 4 KB BRAMs of a Xilinx Kintex UltraScale KU040 device, Table 1 lists some CRAM configuration embodiments. A particularly effective embodiment uses the last configuration row in the table, in boldface. In this embodiment, the device is configured as 50 clusters, each cluster with 8 GRVI soft processor cores, pairwise-sharing 4 KB instruction RAMs ("IRAMs"), and together sharing a 32 KB cluster RAM.

**Table 1: Some Kintex UltraScale KU040 Cluster Configuration Embodiments**

| **BRAMs** | **LUTs** | **PEs** | **IRAM** | **CRAM** | **Clusters** |
|---|---|---|---|---|---|
| 1I + 2D = 3 | 1200 | 2 | 4 KB | 8 KB | 200 |
| 2I + 4D = 6 | 2400 | 4 | 4 KB | 16 KB | 100 |
| 4I + 8D = 12 | 4800 | 2 | 16 KB | 32 KB | 50 |
| **41 + 8D = 12** | **4800** | **8** | **4 KB** | **32 KB** | **50** |

In an embodiment targeting the 4 KB BRAMs and larger 32 KB URAMs ("UltraRAMs") of a Xilinx Virtex UltraScale+ VU9P device, Table 2 lists some CRAM configuration embodiments. A particularly effective embodiment for that device uses the last configuration row in the table, in boldface. (Note the VU9P FPGA provides a total of 1.2M LUTs, 2160 BRAMs, 960 URAMs.) In this embodiment, the device is configured as 210 clusters, each cluster with 8 GRVI soft processor cores, pairwise-sharing 8 KB IRAMs, and together sharing a 128 KB cluster RAM.

**Table 2: Some Virtex UltraScale+ VU9P Cluster Configuration Embodiments**

| **BRAMs** | **URAMs** | **LUTs** | **PEs** | **IRAM** | **CRAM** | **Clusters** |
|---|---|---|---|---|---|---|
| 1 | 1 | 1200 | 2 | 4 KB | 32 KB | 840 |
| 2 | 2 | 2400 | 4 | 4 KB | 64 KB | 420 |
| 4 | 4 | 4800 | 8 | 4 KB | 128 KB | 210 |
| 8 | **4** | **4800** | **8** | **8 KB** | **128 KB** | **210** |

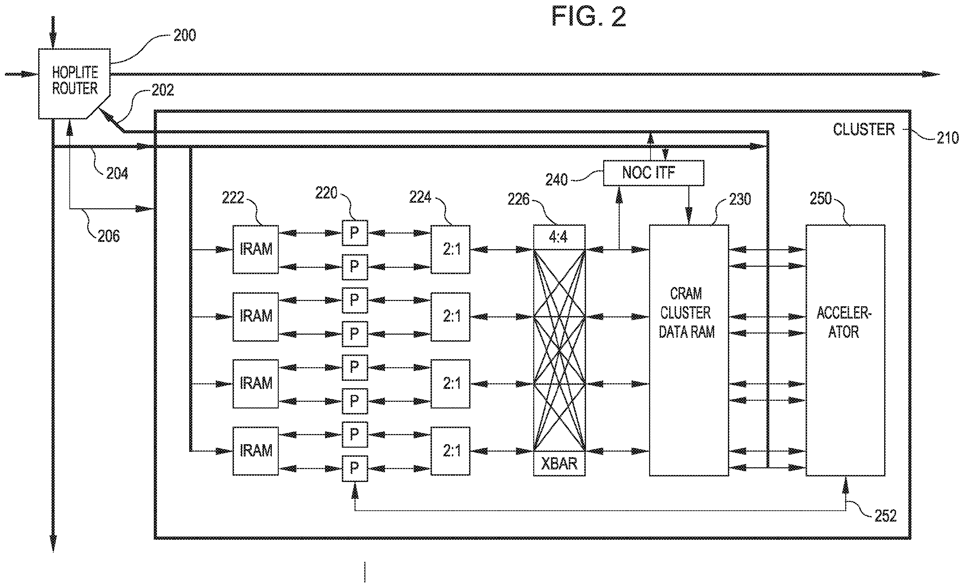

In some embodiments, the number of BRAMs and URAMs per cluster determines the number of LUTs that a cluster including those BRAMS/URAMs might use. In a KU040, twelve BRAMs correspond to 4800 6-LUTs. In an embodiment summarized in Table 1, eight PEs share 12 BRAMs. Four BRAMs are used as small 4 KB kernel program instruction memories (IRAMs). Each pair of processors share one IRAM. The other eight BRAMs form a 32 KB cluster shared memory (CRAM). By clustering each of pairs of 4 KB BRAMs together into four logical banks, and configuring the (inherently dual port) 4 KB BRAMs, each with one 16-bit-wide port and one 32-bit-wide port, a 4-way banked interleaved memory with a total of twelve ports is achieved. Four 32-bit-wide ports provide a 4-way banked interleaved memory for PEs. Each cycle, up to four accesses may be made on the four ports. The eight PEs connect to the CRAM via four 2:1 concentrators and a 4x4 crossbar. (This advantageous arrangement requires fewer than half of the LUT resources of a full 32-bit-wide 8x8 crossbar. See Fig. 2. In case of simultaneous access to a bank from multiple PEs, an arbiter (not shown) grants port access to one PE and denies it to others, *i.e.* halts the others' pipelines until each is granted access.

In some embodiments, the remaining eight ports provide an 8-way banked interleaved memory for accelerator(s), and also form a single 256-bit wide port to load and send, or to receive and store, 32 byte messages, per cycle, to/from any NOC destination, via the cluster's Hoplite router.

To send a message, one or more PEs prepare a message buffer in CRAM. In some embodiments, the message buffer is a continuous 32 B region of the CRAM memory. In some embodiments the message buffer address is aligned to a multiple of 32 bytes, *i.e.* it is 32 B-aligned. Then one PE stores the system-wide address, also known as the Phalanx Address (PA), of the message destination to the cluster's NOC interface's memory mapped I/O region range. The cluster's NOC interface receives the request and atomically loads, from CRAM, a 32 B message data payload, and formats it as a NOC message, and sends it via its message-output port to the cluster's router's message-input port, into the interconnect network, and ultimately to some client of the NOC identified by a destination address of the message. The PA of the message destination encodes the NOC address (x,y) of the destination, as well as the local address (within the destination client core, which may be another compute cluster), at the destination. If the destination is a compute cluster, then the incoming message is subsequently written into that cluster's CRAM and/or is received by the accelerator(s). Note this embodiment's advantageous arrangement of the second set of CRAM ports with a total of 8x32=256 bits of memory ports, directly coupled to the NOC router input, and the use of CRAM-memory-buffered software message sends, and the use of an ultra-wide NOC router and NOC, permits unusually high bandwidth message/send receive - a single 32-bit PE can send a 32 byte message from its cluster, out into the NOC, at a peak rate of one send per cycle, and a cluster can receive one such 32 byte message every cycle.

In some embodiments, this message send mechanism also enables fast local memcpy and memset. Aligned data may be copied at 32 B per two cycles, by sending a series of 32 B messages from a source address in a cluster RAM, via its router, back to a destination address in the same cluster RAM; that is, this procedure allows a cluster circuit to "send to itself'.

In some embodiments, a cluster circuit is configured with one or more accelerator cores (also called "accelerators"). An accelerator core is typically a hardwired logic circuit, or a design-time or run-time configurable logic circuit, which unlike a processor core, is not a general purpose, instruction-executing, circuit. Rather in some embodiments, the logic circuit implemented by an accelerator core may be specialized to perform, in fixed logic, some computation specific to one more workloads.

In some embodiments wherein accelerator cores are implemented in an FPGA, the FPGA may be configured with a particular one or more accelerators optimized to speed up one or more expected workloads that are to be executed by the FPGA.

In some embodiments accelerator cores communicate with the PEs via the CRAM cluster shared memory, or via direct coupling to a PE's microarchitectural ALU output, store-data, and load-data ports. Accelerators may also use a cluster router to send/receive messages to/from cluster RAMs, to/from other accelerators, or to/from memory or I/O controllers.

In some embodiments a cluster sends or receives a message in order to, without limitation, store or load a 32 B message payload to DRAM, to send/receive an Ethernet packet (as a series of messages) to/from an Ethernet NIC (network interface controller), and/or to send/receive data to/from AXI4 Stream endpoints.

In some embodiments, a cluster design includes a floorplanned FPGA layout of a cluster of 8 GRVI PEs, 12 BRAMs (4 IRAMs, 1 CRAM), 0 accelerators, local interconnect, Hoplite NOC interface, and Hoplite NOC router. In some embodiments, at design time, a cluster may be configured with more/fewer PEs and more or less IRAM and CRAM, to right-size resources to workloads.

In some embodiments, as with the GRVI soft processor core, the cluster 'uncore' (the logic circuits of the cluster, excluding the soft processor cores), is implemented with care to conserve LUTs. In some embodiments there are no FIFOs (first-in-first-out) buffers or elastic buffers in the design. This reduces the LUT overhead of message input/output buffering to zero. Instead, NOC ingress flow control of message sends is manifest as wait states (pipeline holds) in the PE(s) attempting to send messages. Back pressure from the NOC, through the arbitration network, to each core's pipeline clock enable, may be the critical path in the design, and in this embodiment it limits the maximum clock frequency to about 300 MHz (small NOCs) and 250 MHz (die spanning SOCs).

### HOPLITE ROUTER AND HOPLITE NETWORK ON A CHIP

Some embodiments use a Hoplite router per cluster that are together composed into a Hoplite NOC. Hoplite is a configurable directional 2D torus router that efficiently implements high bandwidth NOCs on FPGAs. An embodiment of a Hoplite router has a configurable routing function and a switch with three message inputs (XI, YI, I (i.e. from a client)) and two outputs (X, Y). At least one of the output message ports serves as the client output. (From the client's perspective this is the message-input bus). Routers are composed on unidirectional X and Y rings to form a 2D torus network...

A Hoplite router is simple, frugal, wide, and fast. In contrast with prior work, Hoplite routers use unidirectional, not bidirectional links; no buffers; no virtual channels; local flow control (by default); atomic message send/receive (no message segmentation or reassembly); client outputs that share NOC links; and are configurable, e.g. ultra-wide links, workload optimized routing, multicast, in-order delivery, client I/O specialization, link energy optimization, link pipelining, and floorplanning.

In some embodiments, a Hoplite router is an austere bufferless deflecting 2D torus router. To conserve LUTs, the use of a directional torus reduces a router's 5x5 crossbar to 3x3. The client output message port is infrequently used and inessential, and may be elided by reusing an inter-router link as a client output. This further simplifies the switch to 3x2. Since there are no buffers, when and if output port contention occurs, the router deflects a message to a second port. It will loop around its ring and try again later.

In some embodiments, a one-bit slice of a 3x2 switch and its registers may be technology mapped into a fracturable Xilinx 6-LUT or Altera ALM, with a one wire+LUT+FF delay critical path through a router. For die-spanning NOCs, inter-router wire delay is typically 90% of the clock period. In some embodiments, this can be reduced by using pipeline registers in the inter-router links. In some embodiments, Intel Stratix 10 HyperFlex interconnect pipeline flip-flops, not logic cluster flip-flops, implement NOC ring link pipeline registers, enabling very high frequency operation.

In some embodiments a KU040 floorplanned die-spanning 6x4 Hoplite NOC with 256-bit message payloads runs at 400 MHz and uses <3% of LUTs of the device. In some embodiments, the Hoplite NOC interconnect torus is not folded spatially, and employs extra pipeline registers in the Y rings and X rings for signals that may need to cross the full length or breadth of the die (or the multi-chip die in the case of 2.5D stacked-silicon-interconnect multi-die FPGAs). In some embodiments, link bandwidth is 100 Gb/s and the Hoplite NOC interconnect bisection bandwidth is 800 Gb/s. In some embodiments average latency from anywhere on the chip to anywhere else on the chip is about 7 cycles / 17.5 ns assuming no message deflection.

Compared to other FPGA-optimized buffered virtual channel (VC) routers [5], a Hoplite NOC has an orders of magnitude better area × delay product. (Torus16, a 4x4 torus with 64-bit-flits and 2 virtual channels uses ∼38,000 LUTs and runs at 91 MHz. In an embodiment, a 4x4 Hoplite NOC of 64-bit messages uses 1230 LUTs and runs at 333-500 MHz.) In some embodiments it is cheaper to build two Hoplite NOCs than one 2-virtual-channel NOC!

The advantageous area efficiency and design of an embodiment of a Hoplite router and of an embodiment of a Hoplite NOC torus including such routers, enables high performance interconnection across the FPGA die of diverse client cores and external interface cores, and simplifies chip floorplanning and timing closure, since as long as a core can connect to some nearby router, and tolerate a few cycles of NOC latency, its particular location on the FPGA (its floorplan) does not matter very much relative to operational speed and latency.

Fig. 6 is a die plot of an embodiment of a floorplanned 400 core GRVI Phalanx implemented in a Kintex UltraScale KU040. This embodiment has ten rows by five columns of clusters (i.e. on a 10x5 Hoplite NOC); each cluster with eight PEs sharing 32 KB of CRAM. It uses 73% of the device's LUTs and 100% of its BRAMs. The 300-bit-wide Hoplite NOC uses ∼6% of the device's LUT (∼40 LUTs/PE). The clock frequency is 250 MHz. In aggregate, the fifty clusters times eight PEs/cluster = 400 PEs have a combined peak throughput of about 100,000 MIPS. Total bandwidth into the CRAMs is 600 GB/s. The NOC has a bisection bandwidth of about 700 Gb/s. Preliminary power data of this embodiment, measured via SYSMON, is about 13 W (33 mW per PE) running a message passing test wherein PE #0 repeatedly receives a request message from every other PE and sends back to each requesting PE a response message.

Listing 1 is a listing of Verilog RTL that instantiates an exemplary configurable GRVI Phalanx parallel computer SOC with dimension parameters NX and NY, *i.e.* to instantiate the NOC and an NX × NY array of clusters and interconnect NOC routers' inputs/outputs to each cluster. (This exemplary code employs 'XY etc. macros to mitigate Verilog's lack of 2D array ports.) A SOC/NOC floorplan generator (not shown) produces an FPGA implementation constraints file to floorplan the SOC/NOC into a die-spanning 10x5 array of tiles.

In an embodiment, the GRVI Phalanx design tools and RTL source code are extensively parameterized, portable, and easily retargeted to different FPGA vendors, families, and specific devices.

In an embodiment, a NX=2 x NY=2 x NPE=8 = 32-PE SOC configuration of a Digilent Arty FPGA (a small Xilinx XC7A35T) achieves a clock frequency of 150 MHz and a Hoplite NOC link bandwidth of over 40 Gb/s.

### ACCELERATED PARALLEL PROGRAMMING MODELS

An embodiment of the disclosed parallel computer, with its many clusters of soft processor cores, accelerator cores, cluster shared memories, and message passing mechanisms, and with its ready composability between processors and accelerators within and amongst clusters, provides a flexible toolkit of compute, memory, and communications capabilities that makes it easier to develop and maintain an FPGA accelerator for a parallel software workload. Some workloads will fit its mold, especially highly parallel SPMD or MIMD code with small kernels, local shared memory, and global message passing. Here, without limitation, are some parallel models that map well to the disclosed parallel computer:
1. OpenCL kernels : in which an OpenCL compiler and runtime runs each work group on a cluster, each item on a separate processing core or accelerator;
2. 'Gatling gun' parallel packet processing: in which each new packet arriving at an external network interface controller (NIC) core is sent over the NOC to an idle cluster, which may exclusively work on that packet for up to (#clusters) packet-time-periods;
3. OpenMP/TBB (Threading Building Blocks): in which MIMD tasks are run on processing cores within a cluster;
4. Streaming data through process networks: in which data flows as streams of data passed as shared memory messages within a cluster, or passed by sending messages between clusters; and
5. Compositions of such models.

In an embodiment the disclosed parallel computer may be implemented in an FPGA, so these and other parallel models may be further accelerated via custom soft processor and cluster function units; custom memories and interconnects; and custom standalone accelerator cores on cluster RAM or directly connected on the NOC.

### References

[1] Altera Corp., "Arria 10 Core Fabric and General Purpose I/Os Handbook," May 2015. [Online]. Available: https://www.altera.com/en US/pdfs/literature/hb/arria-10/a10 handbook, pdf
[2] Xilinx Inc., "UltraScale Architecture and Product Overview, DS890 v2.0," February 2015. [Online]. Available: http://www.xilinx.com/support/documentation/data sheets/ds890-ultrascale-overview.pdf
[3] A. Putnam, et al, A reconfigurable fabric for accelerating large-scale datacenter services, in 41st Int'l Symp. on Comp. Architecture (ISCA), June 2014.
[4] D. Cheriton, M. Malcolm, L. Melen, G. Sager. Thoth, a portable realtime operating system. Commun. ACM 22, 2 Feb. 1979.
[5] M. K. Papamichael and J. C. Hoe, "Connect: Re-examining conventional wisdom for designing noes in the context of fpgas," in Proceedings of the ACM/SIGDA International Symposium on Field Programmable Gate Arrays, ser. FPGA ' 12. New York, NY, USA: ACM, 2012, pp. 37-46. [Online]. Available: http://doi.acm.org/10.1145/2145694.2145703

### SUMMARY

An aspect of the present invention provides a cluster circuit as set out in claim 1.

An embodiment of the system in a Xilinx Kintex UltraScale 040 devices comprises 400 FPGA-efficient RISC-V instruction set architecture (ISA) soft processors, designated "GRVI" (Gray Research RISC-V-I) into a 10x5 torus of clusters, each cluster comprising a Hoplite router interface, 8 GRVI processing elements, a multiport, interleaved 32 KB cluster data RAM, and one or a plurality of accelerator cores. The system achieves a peak aggregate compute rate of 400 x 333 MHz x 1 instruction/cycle = 133 billion instructions per second. Each cluster can send or receive a 32B (i.e. 256b) message into/from the NOC each cycle. Each of the 10x5 clusters has a Hoplite router. The resulting Hoplite NOC is configured with 300-bit links sufficient to carry a 256-bit data pay load, plus address information and other data, each clock cycle. The aggregate memory bandwidth of the processors into the cluster RAM (CRAM) is 4 ports x 50 CRAMs x 4B/cycle ^{∗} 333 MHz = 266 GB/s. The aggregate memory bandwidth of the NOC and any CRAM-attached accelerators into the CRAM memories is 50 CRAMs x 32B/cycle ^{∗} 333 MHz = 533 GB/s.

In an embodiment, a number of external interfaces, e.g. without limitation
10G/25G/40G/100G Ethernet, many channels of DRAM or many channels of High Bandwidth Memory, may be attached to the system. By virtue of the NOC interconnect, any client of the NOC may send messages, at data rates exceeding 100 Gb/s, to any other client of the NOC.

The many features of embodiments of the Hoplite router and NOC, and of other embodiments of the disclosure, include, without limitation:
1) A parallel computing system implemented in a system on a chip (SOC) in an FPGA;
2) Comprising many soft processors, accelerator cores, and compositions of the same into clusters;
3) A cluster memory system providing shared memory amongst and between the soft processors, the accelerators, and a NOC router interconnecting the cluster to the NOC;
4) The cluster memory providing high bandwidth access to the data by means of configuring its constituent block RAMs so as to enable, via multi-porting and bank interleaving, a high performance memory subsystem with multiple concurrent memory accesses per cycle;
5) An FPGA-efficient soft processor core design and implementation.
6) Means to compose the many processors and accelerators together into a working system.
7) Means to program the many processors and accelerators.
8) Tools that generate software and hardware description systems to implement the systems.
9) Computer readable media that comprise the FPGA configuration bitstream (firmware) to configure the FPGA to implement the SOC.
10) A NOC with a directional torus topology and deflection routing system;
11) A directional 2D bufferless deflection router;
12) a five-terminal (3-messages-in, 2-messages-out) message router switch;
13) optimized technology mapping of router switch elements in Altera 8-input fracturable LUT ALM ("adaptive logic module") [1] and Xilinx 6-LUT [2] FPGA technologies that consume only one ALM or 6-LUT per router per bit of link width;
14) a system with configurable and flexible routers, links, and NOCs;
15) a NOC with configurable multicast-message-delivery support;
16) a NOC client interface, supporting atomic message send and receive each cycle, with NOC and client-flow control;
17) a configurable system floor-planning system;
18) a system configuration specification language;
19) a system generation tool to generate a workload-specific system and NOC design from a system and NOC configuration specification, including, without limitation, synthesizable hardware-definition-language code, simulation test bench, FPGA floor-plan constraints, FPGA implementation constraints, and documentation.
20) Diverse applications of the system and NOC as described herein below.

### BRIEF DESCRIPTION OF THE DRAWINGS

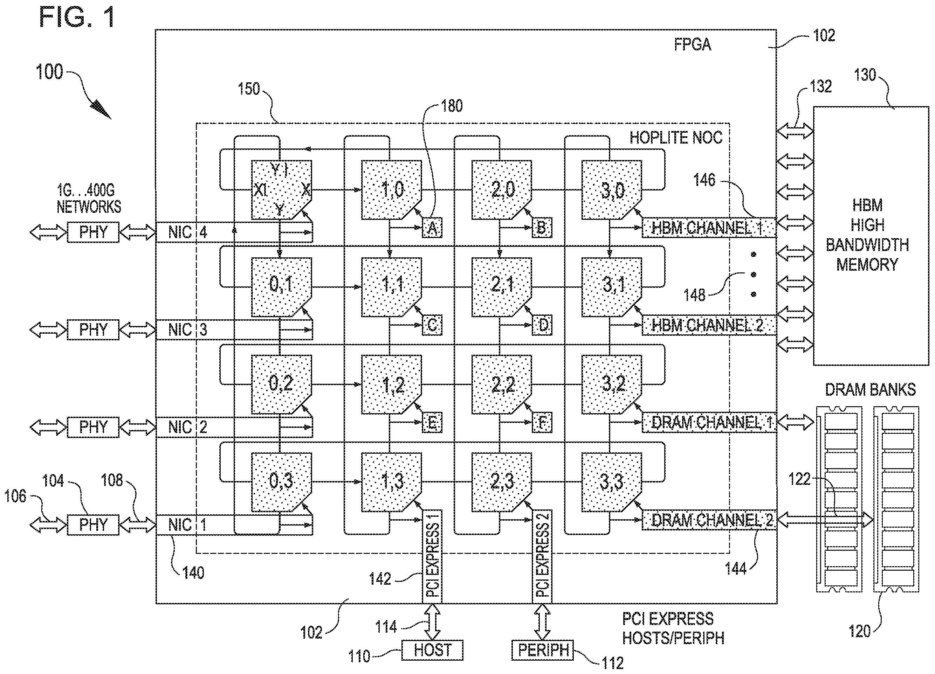

Figures 1 and 2 are diagrams of an embodiment of the disclosed FPGA efficient computing system that incorporates one of more embodiments of a soft processor, accelerator, router, external interface core clients, and a NOC. This exemplary system implements a massively parallel Ethernet router and packet processor.
Fig 1 is a high-level diagram of an embodiment of a computing device 100 of the FPGA computing system, where the computing device 100 comprises an SOC implemented in an FPGA 102, network interfaces 106, PCI- express interfaces 114, connected PCI-express host 110, and DRAM 120. The FPGA computing system also comprises HBM DRAM memory 130, which includes numerous HBM DRAM channels 132, and a plurality of multiprocessor-accelerator-cluster client cores 180.
Fig. 2 is a diagram of an embodiment of one multiprocessor cluster tile of the FPGA computing system of Fig. 1, where the system comprises a 2D directional torus 'Hoplite' router 200 coupled to neighboring upstream and downstream Hoplite routers (not shown) on its X and Y rings and also coupled to the accelerated-multiprocessor-cluster client core 210. The exemplary cluster 210 comprises eight soft processor cores 220 (also referred to as "instruction executing computing cores"), which share access to a cluster RAM (CRAM) 230, which, in turn, is connected to a shared accelerator core 250 (also referred to as a "configurable accelerator"), and to the router 200 to send and receive messages over the NOC. In the exemplary FPGA computing system described herein, the system comprises fifty such tiles, or four hundred processors in all. The NOC is used to carry data between clusters, between clusters and external interface cores (for example to load or store to external DRAM), and directly between external interface cores.

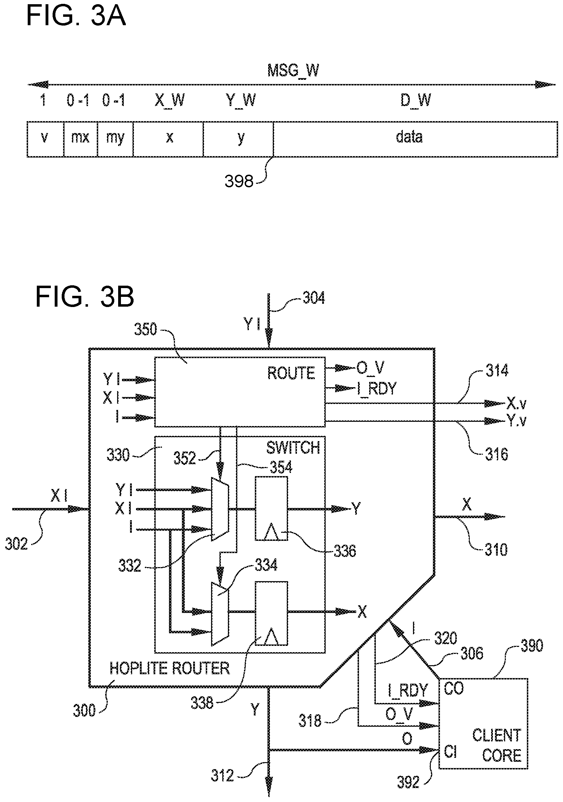

Figure 3A is a diagram of an embodiment of a Hoplite NOC message 398. A message is a plurality of bits that comprises a first-dimension address 'x', a second-dimension address 'y', a data payload 'data,' and optionally other information such as a message-valid indicator.
Figure 3B is a diagram of an embodiment of a router of a NOC, which comprises one router 300 coupled to one client core 390. A router 300 comprises message inputs, message outputs, validity outputs, a routing circuit 350, and a switch circuit 330 (the routing circuit 350 can be considered to include the switch circuit 330, or the routing circuit and the switch circuit can be considered as separate components). Message inputs comprise a first-dimension message input 302, which is designated XI, and a second-dimension message input 304, which is designated YI. Message inputs may also comprise a client-message input 306, which is designated I. Message outputs comprise a first-dimension message output 310, which is designated X, and a second-dimension message output 312, which is designated Y. Validity outputs comprise an X-valid indicator line 314, which is configured to carry a signal that indicates that the X-output message is valid, a Y-valid indicator line 316, which is configured to carry a signal that indicates that the Y-output message is valid, an output-valid indicator line 318, which is designated O_V and which is configured to carry a signal that indicates that the Y-output message is a valid client-output message, and an input-ready indicator line 320, which is designated I_RDY and which is configured to carry a signal that indicates that the router 300 has accepted the client core 390's input message this cycle.

To illustrate an example reduction to practice of an embodiment of the disclosed system, Figures 4A - 4D are diagrams of four die plots that illustrate different aspects of the physical implementation and floor planning of such a system and its NOC.
Figure 4A is a diagram of the FPGA SOC overall, according to an embodiment. Figure 4A overlays a view of the logical subdivision of the FPGA into 50 clusters.
Figure 4B is a diagram of the high-level floorplan of the tiles that lay out the router+cluster tiles in a folded 2D torus, according to an embodiment.
Figure 4C is a diagram of the explicitly placed floorplanned elements of the design, according to an embodiment.
Figure 4D is a diagram of the logical layout of the NOC that interconnects the clusters 210 (Figure 2).
Figure 5 is a flowchart describing a method to send a message from one processor core or accelerator core in a cluster, to another cluster.

### DETAILED DESCRIPTION

A massively parallel computing system is disclosed. An example embodiment, which illustrates design and operation of the system, and which is not limiting, implements a massively parallel Ethernet router and packet processor.

Figure 1 is a diagram of a top-level view of a system that includes a computing device 100, according to an embodiment. In addition to the computing device 100, the system comprises an SOC implemented in an FPGA 102, network interfaces 106 with NIC external-interface client cores 140, PCI-express interfaces 114 with PCI-express external-interface client cores 142, connected PCI-express host computer 110, DRAM 120 with DRAM-channel external-interface client cores 144, a HBM (high bandwidth memory) device with HBM-channel external-interface client cores 146, and multiprocessor/accelerator-cluster client cores/circuits 180 (cores/circuits A-F).

Figure 2 is a diagram of one compute cluster client/circuit 210 of the system of Fig. 1, according to an embodiment. Coupled to the cluster client/circuit 210 is a Hoplite router 200 (corresponding to router (1,0) of Fig. 1) coupled to other Hoplite routers (not shown in Figure 2) and coupled to the multiprocessor/accelerator-cluster client 210 (corresponding to client core "A" 180 in Figure 1). The exemplary cluster 210 comprises eight 32-bit RISC soft processor cores 220, with instruction memory (IRAM) block RAMs 222, which share access to a cluster data RAM (CRAM) 230, which is also connected to an accelerator core 250. The cluster 210 is connected to the router 200 to send and receive messages on message-output bus 202 and message-input bus 204 over the NOC. Some kinds of messages sent or received may include, without limitation, data messages destined for other clusters, or may be messages to load instruction words into the IRAMs 222, or may be cluster control messages, e.g. messages to reset the cluster or to enable or disable instruction execution of particular ones of processor cores 220, or may be messages to access memory or I/O controllers that reside outside the cluster, on or off die, such as RAM-load-request, RAM-load-response, and RAM-store-request. A local interconnection network 224 and 226 connects the instruction-executing cores 220 to the address-interleaved banked multi-ported cluster RAM 230, which comprises a plurality of block RAMs, and to the Hoplite NOC router interface 240. In this embodiment this interconnection network comprises request concentrators 224 and a 4x4 crossbar 226. In other embodiments, with more or fewer processor cores 220, or more or fewer ports on CRAM 230, different interconnection networks and memory port arbitration disciplines may be used to couple processor cores 220 to CRAM 230 ports. In an embodiment an 8x8 crossbar couples cores 220 to CRAM 230 ports. In an embodiment, one single 8:1 multiplexer is used to couple cores 220 to CRAM. In an embodiment, access from processors to CRAM ports is time division multiplexed, with respective cores 220 granted access on particular clock cycles.

In this example system, a cluster-core tile, implemented in an FPGA, uses four block RAMs for the instruction RAMs 222 and eight block RAMs for the cluster-data RAM 230. This configuration enables up to four independent 32-bit reads or writes into the CRAM 230 by the processors 220 and concurrently up to eight 32-bit reads or writes into the CRAM by the accelerators 250 (if any) or by the network interface 240.

In the exemplary computing system described herein, the system comprises ten rows x five columns = 50 of such multiprocessor/accelerator cluster cores, or 50 x 8 = 400 processors 220 in total. A NOC (network on chip) is used to carry data as messages between clusters, between clusters and external-interface cores (for example to load or store to external DRAM), and directly between external-interface cores. In this example, NOC messages are approximately 300 bits wide, including 288 bits of data payload (32-bit address and 256-bit data field).

The cluster core 210 also comprises a Hoplite NOC router interface 240, which connects the cluster's CRAM memory banks to the cluster's Hoplite router input, so that a message data payload read from the cluster's CRAM via one or more of its many ports may be sent (output) to another client on the NOC via the message input port on the cluster's Hoplite router, or the data payload of a message received from another NOC client via the NOC via the cluster's Hoplite router may be written into the cluster's CRAM via one or more of its many ports. In this example, the processor cores 220 share access to the cluster's CRAM with each other, with zero or more accelerator cores 250, and with the Hoplite NOC interface. Accordingly, a message received from the NOC into the local memory may be directly accessed and processed by any (or many) of the cluster's processors, and conversely the cluster's processors may prepare a message in memory and then cause it to be sent from the cluster to other client cores of the NOC via the Hoplite router 200.

In the cluster arrangement of cores 210, CRAM 230, and network interface 240 described in conjunction with Figures 1 and 2, high-throughput and low-latency computation may be achieved. An entire 32 byte request message data payload may be received from the NOC and written into the CRAM in one clock cycle; then as many as eight processors may be dispatched to work on the data in parallel; then a 32 byte response message may be read from the CRAM and sent into the NOC in one clock cycle. In the exemplary system, this can even happen simultaneously across some of the fifty instances of the cluster 210, on a single FPGA device. So in aggregate, this parallel computer system can send up to 50 x 32 bytes = 1600 bytes of message data per clock cycle.

In this example, a computing cluster 210 may further comprise zero, one, or more accelerator cores 250, coupled to the other components of the cluster in various ways. An accelerator 250 may use the cluster-local interconnect network to directly read or write one or more CRAM ports. An accelerator 250 may couple to a soft processor 220, and interact with software execution on that processor, in various ways, for example and without limitation, to access registers, receive data, provide data, determine conditional-branch outcomes, through interrupts, or through processor-status-word bits. An accelerator 250 may couple to the Hoplite router interface 240 to send or receive messages. Within a cluster 210, interconnection of the processor cores 220, accelerators 250, memories 222 and 230, and Hoplite NOC interface 240 make it possible for the combination of these components to form a heterogeneous accelerated computing engine. Aspects of a workload that are best expressed as a software algorithm may be executed on one or more of the processor cores 220. Aspects that may be accelerated or made more energy efficient by expression in a dedicated logic circuit may be executed on one or more accelerator cores 250. The various components may share state, intermediate results, and messages through direct-communication links, through the cluster's shared memory 230, and via sending and receiving of messages. Across the many clusters including clusters 180 A-F of the SOC 102, different numbers and types of accelerator cores 250 may be configured. As an example, in a video special effects processing system, a first cluster 180 A (Fig. 1) may include a video decompression accelerator core 250; a second cluster 180 B (Fig. 1) may include a video special effects compositor accelerator core 250; and a third cluster 180 C (Fig. 1) may include a video (re)compression accelerator core 250.

Referring to Figs. 1-2, at the top level of the system design hierarchy, a Hoplite NOC comprising a plurality of routers 150 (some of which are clusters' routers 200), interconnects the system's network interface controllers (NICs) 140, DRAM channel controllers 144, and processing clusters 210. Therefore, within an application running across the compute clusters, any given processor core 220 or accelerator core 250 may take full advantage of all of these resources. By sending a message to a DRAM-channel controller 144 via the NOC 150, a cluster 210 may request the message data payload be stored in DRAM at some address, or may request the DRAM channel controller to perform a DRAM read transaction and then send the resulting data back to the cluster, in another message over the NOC. In a similar fashion, another client core, such as a NIC, may send messages across the NOC to other clients. When a NIC interface 140 receives an incoming Ethernet packet, it may reformat it as one or more NOC messages and send these via the NOC to a DRAM-channel interface 144 to save the packet in memory, it may send these messages to another NIC to directly output the packet on another Ethernet network port, or it may send these messages to a compute cluster for packet processing. In some applications, it may be useful to multicast certain messages to a plurality of clients including compute-cluster clients 210. Rather than sending the messages over and over to each destination, multicast delivery may be accomplished efficiently by prior configuration of the NOC's constituent Hoplite routers to implement multicast message routing.

Figure 3A is a diagram of a Hoplite NOC message 398, according to an embodiment. A message is a plurality of bits that comprises the following fields: a first-dimension address 'x', a second-dimension address 'y', and a data payload 'data'. And the message may further comprise a validity indication 'v,' which indicates to the router core that a message is valid in the current cycle. In an alternative embodiment, this indicator is distinct from a message. The address fields (x,y) correspond to the unique two-dimensional-destination NOC address of the router that is coupled to the client core that is the intended destination of the message. A dimension address may be degenerate (0-bits wide) if it is not required in order that all routers may be uniquely identified by a NOC address. And in alternative embodiment, the destination address may be expressed in an alternative representation of bits, for example, a unique ordinal router number, from which may be obtained by application of some mathematical function, logical x and y coordinates of the router which is the intended destination of the message. In another alternative embodiment, the destination address may comprise bits that describe the desired routing path to take through the routers of the NOC to reach the destination router. In general, a message comprises a description of the destination router sufficient to determine whether the message, as it is traverses a two (or greater) dimensional arrangement of routers, is as of yet at the Y ring upon which resides the destination router, and is as of yet at the X ring upon which resides the destination router.) Furthermore, a message may comprise optional, configurable multicast route indicators "mx" and "my," which facilitate delivery of multicast messages.

In an embodiment, each field of the message has a configurable bit width. Router build-time parameters MCAST, X_W, Y_W, and D_W select minimum bit widths for each field of a message and determine the overall message width MSG_W. In an embodiment, NOC links have a minimum bit width sufficient to transport a MSG_W-bit message from one router to the next router on the ring in one cycle.

Referring again to Figs 1-2, an example application of this exemplary accelerated parallel computer system is as a "smart router" that routes packets between NICs while also performing packet compression and decompression and packet sniffing for malware at full throughput, as packets traverse the router. This specific example should not be construed to be limiting, but rather serves to illustrate how an integrated parallel-computing device employing clusters of processors and accelerators, composed via a Hoplite NOC interconnect system, can input work requests and data, perform the work requests cooperatively and often in parallel, and then output work results. In such an application, a network packet (typically 64 to 1500 bytes long) arrives at a NIC. The NIC receives the packet and formats it into one or more 32 byte messages. The NIC then addresses and sends the messages to a specific computing-cluster client 210 via the NOC for packet processing. As the computing cluster 210 receives the input packet messages, each message data payload (a 32 byte chunk of the network packet from the NIC) is stored to a successive 32 byte region of the cluster's CRAM 230, thereby reassembling the bytes of the network packet form the NIC locally in this cluster's CRAM cluster memory. Next, if the packet data has been compressed, one or more soft processors 220 in the cluster perform a decompression routine, reading bytes of the received network packet from CRAM, and writing the bytes of a new, uncompressed packet elsewhere in the cluster's CRAM

Given an uncompressed packet in CRAM, malware-detection software executes on one or more of the cluster's soft processors 220 to scan the bytes of the message payload for particular byte sequences that exhibit characteristic signatures of specific malware programs or code strings. If potential malware is discovered, the packet is not to be retransmitted on some network port, but rather is saved to the system's DRAM memory 120 for subsequent 'offline' analysis.

Next, packet-routing software, run on one or more of the soft processors 220, consults tables to determine where to send the packet next. Certain fields of the packet, such as 'time to live', may be updated. If so configured, the packet may be recompressed by a compression routing running on one or more of the soft processors 220. Finally, the packet is segmented into one or more (exemplary) 32 byte NOC messages, and these messages are sent one by one through the cluster's Hoplite router 200, via the NOC, to the appropriate NIC client core 140. As these messages are received by the NIC via the NOC, they are reformatted within the NIC into an output packet, which the NIC transmits via its external network interface.

In this example, the computations of decompression, malware detection, compression, and routing are performed in software, possibly in a parallel or pipelined fashion, by one or more soft processors 220 in one or more computing-cluster clients 210. In alternative embodiments, any or all of these steps may be performed in dedicated logic hardware by accelerator cores 250 in the cluster.

Whereas a soft processor 220 is a program-running, instruction-executing general purpose computing core, *e.g.* a microprocessor or microcontroller, in contrast, an accelerator core may be, without limitation, a fixed function datapath or function unit, or a datapath and finite state machine, or a configurable or semi-programmable datapath and finite state machine. In contrast to a processor core 220, which can run arbitrary software code, an accelerator core 250 is not usually able to run arbitrary software but rather has been specialized to implement a specific function or set of functions or restricted subcomputation as needed by a particular one or more application workloads. Accelerator cores 250 may interconnect to each other or to the other components of the cluster through means without limitation such as direct coupling, FIFOs, or by writing and reading data in the cluster's CRAM 230, and may interconnect to the diverse other components of system 102 by sending and receiving messages through router 200 into the NOC 150.

In an embodiment, packet processing for a given packet takes place in one computing-cluster client 210. In alternative embodiments, multiple compute-cluster clients 210 may cooperate to process packets in a parallel, distributed fashion. For example, specific clusters 210 (*e*.*g*. clusters 180 A-F) may specialize in decompression or compression, while others may specialize in malware detection. In this case, the packet messages might be sent from a NIC to a decompression cluster 210. After decompression, the decompression cluster 210 may send the decompressed packet (as one or more messages) on to a malware scanner cluster 210. There, if no malware is detected, the malware scanner may send the decompressed, scanned packet to a routing cluster 210. There, after determining the next destination for the packet, the routing cluster 210 may send the packet to a NIC client 140 for output. There, the NIC client 140 may transmit the packet to its external network interface. In this distributed packet-processing system, in an embodiment, a client may communicate with another client via some form of direct connection of signals, or, in an embodiment, a client may communicate with another client via messages transmitted via the NOC. In an embodiment, communications may be a mixture of direct signals and NOC messages.

An embodiment of this exemplary computing system may be implemented in an FPGA as follows. Once again, the following specific example should not be construed to be limiting, but rather to illustrate an advantageous application of an embodiment disclosed herein. The FPGA device is a Xilinx Kintex UltraScale KU040, which provides a total of 300 rows x 100 columns of slices of eight 6-LUTs = 240,000 6-LUTs, and 600 BRAMs (block RAMs) of 36 Kb each. This FPGA is configured to implement the exemplary computing device described above, with the following specific components and parameters. A Hoplite NOC configured for multicast DOR (dimension order) routing, with NY=10 rows by NX=5 columns of Hoplite routers and with w=256+32+8+4=300-bit wide links, forms the main NOC of the system.

The FPGA is floor planned into 50 router + multiprocessor/accelerator clusters arranged as rectangular tiles, and arrayed in a 10x5 grid layout, with each tile spanning 240 rows by 20 columns = 4800 6-LUTs and with 12 BRAMs. The FPGA resources of a tile are used to implement a cluster-client core 210 and the cluster's Hoplite router 200. The cluster 210 has a configurable number (zero, one, or a plurality) of soft processors 220. In this example, the soft processors 220 are in-order pipelined scalar RISC cores that implement the RISC-V RV32I instruction-set architecture. Each soft processor 220 consumes about 300 6-LUTs of programmable logic. Each cluster has eight processors 220. Each cluster also has four dual-ported 4 KB BRAMs that implement the instruction memories 222 for the eight soft processors 220. Each cluster 210 also has eight dual-ported 4 KB BRAMs that form the cluster data RAM 230. One set of eight ports on the BRAM array is arranged to implement four address-interleaved memory banks, to support up to four concurrent memory accesses into the four banks by the soft processors 220. The other set of eight ports, with input and output ports each being 32 bits wide, totaling 32 bits x 8 = 256 bits, on the same BRAM array is available for use by accelerator cores 230 (if any) and is also connected to the cluster's Hoplite router input port 202 and the Hoplite router's Y output port 204. Router-client control signals 206 (corresponding to O_V and I_RDY of Figure 3) indicate when the router's Y output is a valid input for the cluster 210 and when the router 200 is ready to accept a new message from the client 210.

A set of memory bank arbiters and multiplexers 224, 226 manages bank access to the BRAM array from the concurrent reads and writes from the eight processors 220.

In this exemplary system, software running on one or more soft processors 220 in a cluster 210 can initiate a message send of some bytes of local memory to a remote client across the NOC. In some embodiments, a special message-send instruction may be used. In another embodiment, a regular store instruction to a special I/O address corresponding to the cluster's NOC interface controller 240 initiates the message send. The store instruction provides a store address and a 32-bit store-data value. The NOC interface controller 240 interprets this as a message-send request, to load from local CRAM payload data of 1-32 bytes at the specified local "store" address, and to send that payload data to the destination client on the NOC, at a destination address within the destination client, indicated by the store's 32-bit data value.

Three examples illustrate a method of operation of the system of Figures 1 and 2, according to an embodiment.
1) To send a message to another processor 220 in another cluster 210, a processor 220 prepares the message bytes in its cluster's CRAM 230, then stores (sends) the message to the receiver/destination by means of executing a store instruction to a memory mapped I/O address interpreted as the cluster's NOC interface controller 240 and interpreted by NOC interface controller 240 as a signal to perform a message send. The 32-bit store-data value encodes (in specific bit positions) the (x,y) coordinates of the destination cluster's router 200, and also the address within the destination cluster's local memory array to receive the copy of the message. The cluster's NOC interface controller 240 reads up to 32 bytes from the cluster BRAM array, formats this into a NOC message, and sends it via the cluster's Hoplite router, across the NOC, to the specific cluster, which receives the message and writes the message payload data into its CRAM 230 at the local address specified in the message.
2) To store a block of 1-32 bytes of data to DRAM through a specific DRAM channel 144, perhaps in a conventional DRAM, perhaps in a segment of an HBM DRAM device, a processor first writes the data (to be written to DRAM) to the cluster's CRAM 230, then stores (sends) the message to the DRAM by means of executing a store instruction to a memory mapped I/O address interpreted as the cluster's NOC interface controller 240, once again interpreted as a signal to perform a message send. The provided 32-bit store-data address indicates a) the store is destined for DRAM rather than the local cluster memory of some cluster, and b) the address within the DRAM array at which to receive the block of data. The NOC interface controller 240 reads the 1-32 bytes from the cluster's CRAM 230, formats this into a NOC message, and sends it via the cluster's Hoplite router 200 across the NOC to the specific DRAM channel controller 144, which receives the message, extracts the local (DRAM) address and payload data, and performs the store of the payload data to the specified DRAM address.
3) To perform a remote read of a block of 1-32 bytes of data, for example, from a DRAM channel 144, into 1-32 bytes of cluster local memory, a processor 220 prepares a load-request message, in CRAM, which specifies the address to read, and the local destination address of the data, and sends (by another memory mapped I/O store instruction to the NOC interface controller 240, signaling another message send) that message to the specific DRAM channel controller 144, over the NOC. Upon receipt by the DRAM channel controller 144, the latter performs the read request, reading the specified data from DRAM 120, then formatting a read-response message with a destination of the requesting cluster 210 and processor 220, and with the read-data bytes as its data payload. The DRAM channel controller 144 sends the read-response message via its Hoplite router 200 via the Hoplite NOC, back to the cluster 210 that issued the read, where the message payload (the read data) is written to the specified read address in the cluster's CRAM 230.

This exemplary parallel computing system is a high-performance FPGA system on a chip. Across all 5x10 = 50 clusters 210, 50x8 = 400 processor cores 220 operate with a total throughput of up to 400 x 333 MHz = 133 billion operations per second. These processors can concurrently issue 50x4 = 200 memory accesses per clock cycle, or a total of 200 x 333 MHz = 67 billion memory accesses per second, which is a peak bandwidth of 267 GB/s. Each of the 50 clusters' memories 230 also have an accelerator/NOC port which can access 32 bytes/cycle/cluster for a peak accelerator/NOC memory bandwidth of 50 x 32 B/cycle = 1.6 KB/cycle or 533 GB/s. The total local memory bandwidth of the machine is 800 GB/s. Each link in the Hoplite NOC carries a 300-bit message, per cycle, at 333 MHz. Each message can carry a 256-bit data payload for a link payload bandwidth of 85 Gbps and a NOC bisection bandwidth of 10 x 85 = 850 Gbps.

The LUT area of a single Hoplite router 200 in this exemplary system is 300 6-LUTs for the router data path and approximately 10 LUTs for the router control/routing function. Thus the total area of this Hoplite NOC 200 is about 50 x 310 = 15,500 LUTs, or just 6% of the total device LUTs. In contrast the total area of the soft-processor cores 220 is 50 x 300 x 8 = 120,000 LUTs, or about half (50%) of the device LUTs, and the total area of the cluster local memory interconnect multiplexers and arbiters 224 and 226 is about 50 x 800 = 40,000 LUTs, or 17% of the device.

As described earlier, in this continuing example system, packets are processed, one by one as they arrive at each NIC, by one or more clusters. In another embodiment, the array of 50 compute clusters 210 is treated as a "Gatling gun" in which each incoming packet is sent as a set of NOC messages to a different, idle cluster. In such a variation, clusters may be sent new packets to process in a strict round robin order, or packets may be sent to idle clusters even as other clusters take more time to process larger or more-complex packets. On a 25G (25 Gbps bandwidth) network, a 100 byte (800 bit) message may arrive at a NIC every (800 bits/25e⁹ b/s) = 32 ns. As each received packet is forwarded (as four 32-byte NOC messages) from a NIC to a specific cluster 210, that cluster, one of 50, works on that packet exclusively for up to 50 packet-arrival-intervals before it must finish up and prepare to receive its next packet. A cluster-packet processing-time interval of 50 x 32 ns = 1600 ns, or 1600 ns/3 ns/cycle = 533 clock cycles, and with eight soft processors 220 the cluster can devote 533 cycles x 8 processors x up to 1 instruction/cycle, *e*.*g*., up to 4200 instructions of processing on each packet. In contrast, a conventional FPGA system is unable to perform so much general purpose programmable computation on a packet in so little time. For applications beyond network-packet compression and malware detection, throughput can be can be further improved by adding dedicated accelerator-function core(s) 250 to the soft processors 220 or to the cluster 210.

In addition to message-passing-based programming models, an embodiment of the system is also an efficient parallel computer to host data-parallel-programming models such as that of OpenCL. Each parallel kernel invocation may be scheduled to, or assigned to, one or more of the cluster circuits 210 in a system, wherein each thread in an OpenCL workgroup is mapped to one core 220 within a cluster. The classic OpenCL programming pattern of 1) reading data from an external memory into local/workgroup memory; then 2) processing it locally, in parallel, across a number of cores; then 3) writing output data back to external memory, maps well to the architecture described in conjunction with Figures 1 and 2, wherein these first and third phases of kernel execution performing many memory loads and stores, achieve high performance and high throughput by sending large 32-byte data messages, as often as each cycle, to or from any DRAM controller's external-interface client core.

In summary, in this example, a Hoplite NOC facilitates the implementation of a novel parallel computer by providing efficient computing cluster client cores 210 of multiple soft processors 220 and accelerators 250 composed along with the cluster's CRAM 230, and with efficient interconnection of its diverse clients - computing cluster cores, DRAM channel-interface cores, and network interface cores. The NOC makes it straightforward and efficient for computation to span compute clusters, which communicate by sending messages (ordinary or multicast messages). By efficiently carrying extreme bandwidth data traffic to any site in the FPGA, the NOC simplifies the physical layout (floor planning) of the system. Any client in the system, at any site in the FPGA, can communicate at high bandwidth with any NIC interface or with any DRAM channel interface. This capability may be particularly advantageous to fully utilize FPGAs that integrate HBM DRAMs and other die-stacked, high-bandwidth DRAM technologies. Such memories present eight or more DRAM channels, 128-bit wide data, at 1-2 Gbps (128-256 Gbps/channel). Hoplite NOC configurations, such as demonstrated in this exemplary computing system, efficiently enable a core, from anywhere on the FPGA die, to access any DRAM data on any DRAM channel, at full memory bandwidth. No available systems or networking technologies or architectures, implemented in an FPGA device, can provide this capability, with such software programmable flexibility, at such high data rates.

Figure 3 is a diagram of a router 200 of Figure 2, according to an embodiment. The router 300 is coupled to one client core/circuit 390 (which may be similar to the cluster core/circuit 210 of Fig. 2), and includes message inputs, message outputs, validity outputs, a routing circuit 350, and a switch circuit 330. The message inputs comprise a first-dimension message input 302, which is designated XI, and a second-dimension message input 304, which is designated YI. Message inputs may also comprise a client message input 306, which is designated I. Message outputs comprise a first -dimension message output 310, which is designated X, and a second-dimension message output 312, which is designated Y. Validity outputs carry an X-valid indicator 314, which is a signal that indicates to the next router on its X ring whether the X-output message is valid, a Y-valid indicator 316, which is a signal that indicates to the next router on its Y ring whether the Y-output message is valid, an output-valid indicator 318, which is designated O_V and which is a signal that indicates to the client 390 that the Y output message is a valid client output message, and an input-ready indicator 320, which is designated I_RDY and which is a signal that indicates whether the router 300 has accepted, or is ready to accept, in the current cycle, the input message from the client core 390. In an embodiment, the X- and Y-valid indicators 314 and 316 are included in the output messages X and Y, but in other embodiments they may be distinct indicator signals.

While enabled, and as often as every clock cycle, the routing circuit 350 examines the input messages 302, 304, and 306 if present, to determine which of the XI, YI, and I inputs should route to which X and Y outputs, and to determine the values of the validity outputs defined herein. In an embodiment, the routing circuit 350 also outputs router switch-control signals comprising X-multiplexer select 354 and Y-multiplexer select 352. In alternative embodiments, switch-control signals may comprise different signals including, without limitation, input- or output-register clock enables and switch-control signals to introduce or modify data in the output messages 310 and 312.

While enabled, and as often as every clock cycle, the switch circuit 330 determines the first- and second-dimension output-message values 310 and 312, on links X and Y, as a function of the input messages 302, 304, and 306 if present, and as a function of switch-control signals 352, 354 received from the routing circuit 350.

Still referring to Figure 3, the client core 390 is coupled to the router 300 via a router input 306 and router outputs 312, 318, and 320. A feature of the router 300 is the sharing of the router second-dimension message output line 312 (Y) to also communicate NOC router output messages to the client 390 via its client input port 392, which is designated CI. In an embodiment, the router output-valid indicator O_V 318 signals to the client core 390 that the Y output 312 is a valid message received from the NOC and destined for the client. An advantage of this circuit arrangement versus an arrangement in which the router has a separate, dedicated message output for the client, is the great reduction in switching logic and wiring that sharing the two functions (Y output and client output) on one output link Y affords. In a busy NOC, a message will route from router to router on busy X and Y links, but only in the last cycle of message delivery, at the destination router, would a dedicated client-output link be useful. By sharing a dimension output link as a client output link, routers use substantially fewer FPGA resources to implement the router switch function.

Referring to Figure 3, the message-valid bits are described in more detail. For a message coming from the X output of the router 300, the message-valid bit X.v is the v bit of the X-output message. That is, the bits on the lines 314 (one bit) and 310 (potentially multiple lines/bits) together form the X-output message. Similarly, for a message coming from the Y output of the router 300 and destined for the downstream router (not shown in Figure 3), the message-valid bit Y.v is the v bit of the Y-output message. That is, the bits on the lines 316 (one bit) and 312 (potentially multiple lines/bits) together form the Y-output message to the downstream router. For a message coming from the Y output of the router 300 and destined for the client 390, although the message-valid bit Y.v is part of the message, the O_V valid bit validates the Y-output message to be a valid router output message, valid for input into the client 390 on its message input port 392. That is, the bits on the lines 316 (one bit), 318 (one bit), and 312 (potentially multiple lines/bits) together form the Y-output message to the client 390, but the client effectively ignores the Y.v bit. Alternatively, in an embodiment, the Y.v bit is not provided to the client 390. And for a message I coming from the CO output of the client 390 on the line 306 and destined for the router 300, the message-valid bit v is part of the message I, although it is not shown separately in Figure 3. That is, the bits on the line 306, which bits include the I-message valid bit, form the I-input message from the client 390 to the router 300. Alternatively, in an embodiment, there is a separate I_V (client input valid) signal from the client core 390 to the router 300 (this separate I_V signal is not shown in Fig. 3).

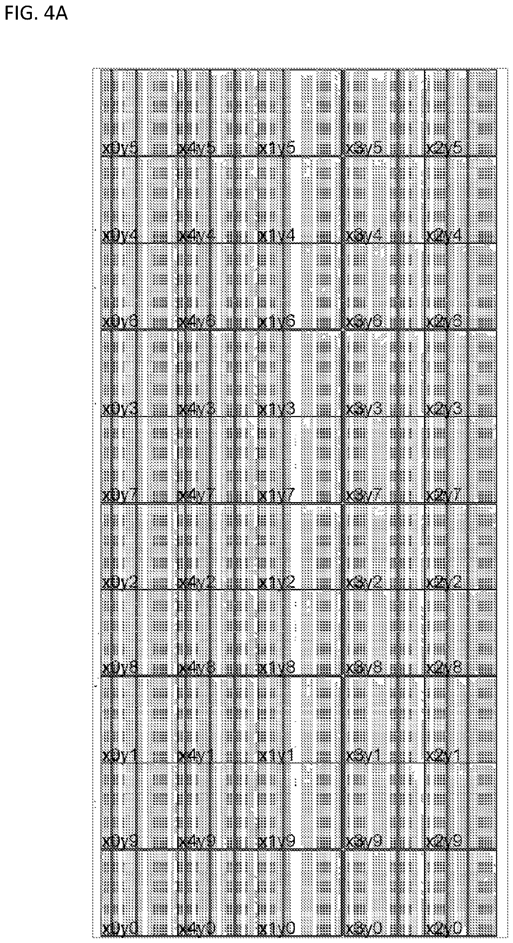

To illustrate an example reduction to practice of an embodiment of the above-described system, Figures 4A - 4D are diagrams of four die plots that illustrate different aspects of the physical implementation and floor planning of such a system and its NOC.

Figure 4A is a diagram of the FPGA SOC overall, according to an embodiment. Figure 4A overlays a view of the logical subdivision of the FPGA into 50 clusters, labeled x0y0, xly0, etc. up to x4y9, atop the placement of all logic in the system. The darker sites are placed soft-processor cores 220 (Figure 2) (400 in all) and their block RAM memories (IRAMs 222 and CRAMs 230 of Figure 2).

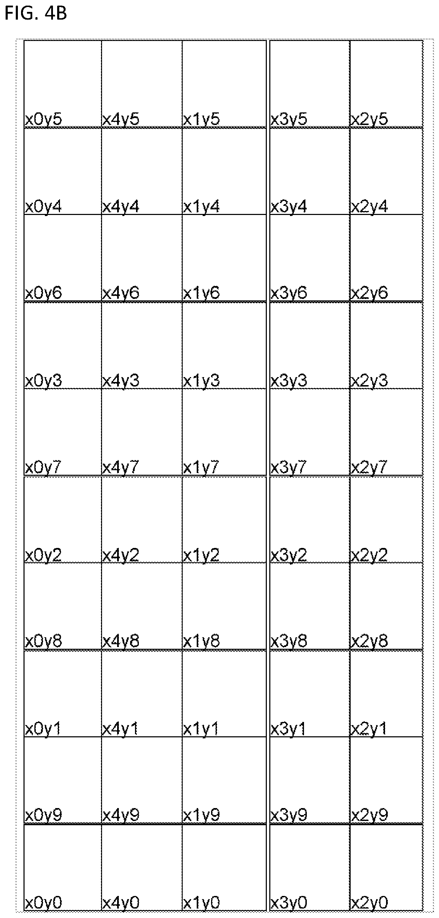

Figure 4B is a diagram of the high-level floorplan of the tiles that lay out the router+cluster tiles in a folded 2D torus, according to an embodiment. The physically folded (interleaved) arrangement of routers and router addressing (*e*.*g*., x0y0, x4y0, xly0, x3y0, x2y0) reduces the number of, or eliminates, long, slow, die-spanning router nets (wires) in the design.

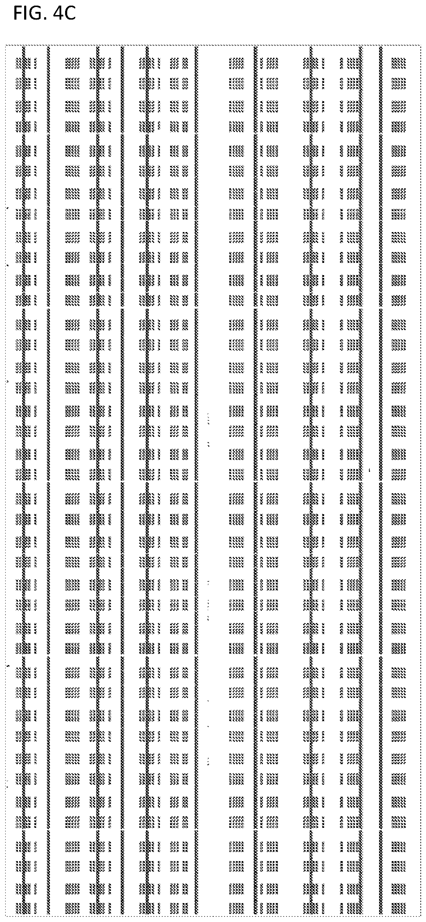

Figure 4C is a diagram of the explicitly placed floor-planned elements of the design, according to an embodiment. This system comprises 400 copies of the 'relationally placed macro' of the soft processor 220 (Figure 2) - in Figure 4C, each four-row-by-five-column arrangement of dots (which represent FPGA 'slices' comprising eight 6-LUTs) corresponds to one processor's 32-bit RISC data path. There are total of 40 rows by 10 columns of processors 220. These processors 220, in turn, are organized into clusters of four rows of two columns of processors. In addition, the vertical black stripes in Figure 4C correspond to 600 explicitly placed block RAM memories that implement instruction and data memories (222 and 230 of Figure 2) within each of the 50 clusters, each with 2 BRAMs (4 IRAMs, 8 for cluster data RAM).

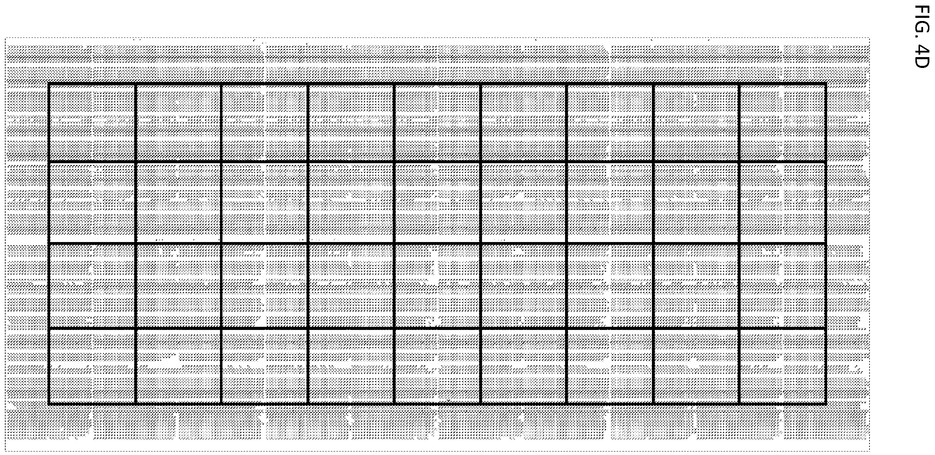

Figure 4D is a diagram of the logical layout of the NOC that interconnects the clusters 210 (Figure 2). Each thick black line corresponds to approximately 300 nets (wires) in either direction between routers in X and Y rings. Note that the NOC is folded per Figures 4A and 4B so, for example, the nets from the x0y0 tile to the xly0 tile pass across the x4y0 tile.

### Exemplary Programming Interfaces to the Parallel Computer

In an embodiment, the parallel computer is experienced, by parallel application software workloads running upon it, as a shared memory software thread plus a set of memory mapped I/O programming interfaces and abstractions. This section of the disclosure provides, without limitation, an exemplary set of programming interfaces to illustrate how software can control the machine and direct it to perform various disclosed operations, such as a processor in one cluster preparing and sending a message to another cluster's CRAM 230.

### Exemplary machine parameters: In an embodiment,

1. The Phalanx implements an NPE (an arbitrary number) = NX ^{∗} NY ^{∗} NPEC-core multiprocessor;
2. each cluster has NPEC (an arbitrary number) processing elements (PEs);
3. each pair of PEs shares one IRAM_SIZE instruction RAM (IRAM);
4. each cluster has CRAM_SIZE of cluster shared data RAM (CRAM);
5. and an inter-cluster message size is MSG_SIZE=32B.

In an embodiment, for a Xilinx KCU105 FPGA, NX=5 NY=10 NPEC=8 IRAM _SIZE=4K NBANKS=4 CRAM_SIZE=32K NPE=400.

In an embodiment, for a Xilinx XC7A35T FPGA, NX=2 NY=2 NPEC=8 IRAM_SIZE=4K NBANKS=4 CRAM_SIZE=32K NPE=32.

In an embodiment, for a Xilinx XCVU9P FPGA, NX=7 NY=27 NPEC=8 IRAM_SIZE=8K NBANKS=4 CRAM_SIZE=128K NPE=1680 (*i*.*e*. 1680 processor cores in all).

Addressing: In an embodiment, all on-chip instruction and data RAM share portions of the same non-contiguous Phalanx address (PA) space. Within a cluster, a local address specifies a resource such as CRAM address or an accelerator control register. Whereas at the Phalanx SOC scale, Phalanx addresses are used to identify where to send messages, *i.e.* message destination i.e. destination cluster and local address within that cluster.

Within a cluster, a processor or accelerator core can directly read and write its own CRAM_SIZE cluster CRAM. In an embodiment where CRAM_SIZE is 32 KB, each cluster receives a 64 KB portion of PA space. Any cluster resources associated with cluster (x,y) are at PA 00xy0000-00xyFFFF (hexadecimal - herein the "0x" prefix denoting hexadecimal may be elided to avoid confusion with cluster coordinate (x,y)).

Instructions: In an embodiment, within a cluster, from the perspective of one processor core, instructions live in an instruction RAM (IRAM) at local text address 0000. The linker links program .text to start at 0000. The boot (processor core reset) address is 0000. Each core only sees IRAM_SIZE of .text so addresses in this address space wrap modulo IRAM_SIZE. Instruction memory is not readable (only executable), and may only be written by sending messages (new instructions in message payload data) to the .text address. In an embodiment, the PA of (x,y).iram[z] is 00xyz000 for z in [0..3]. A PE must be held in reset while its IRAM is being updated. See also the cluster control register description, below.

IRAM initialization examples:
1. sw 0x00100000,0x80000000(A) // copies the 32-bit instruction found in the local CRAM at address A to the first instruction of the first IRAM of cluster (1,0).
2. sw 0x00101004,0x80000000(A) // copies the 32-bit instruction found in the local CRAM at address A+4 to the second instruction of the second IRAM of cluster (1,0).

Data: In an embodiment with CRAM_SIZE=32K, within a cluster, data lives in a shared cluster RAM (CRAM) starting at local data address 8000. All cores in a cluster share the same CRAM. The linker links data sections .data, .bss, etc. to start at 8000. Data address accesses (load/store) wrap modulo CRAM_SIZE. Byte/halfword/word loads and stores must be naturally aligned, and are atomic (do not tear). The RISC-V atomic instructions LR/SC ("load reserved" and "store conditional") are implemented by the processors and enable robust implementation of thread-safe locks, semaphores, queues, etc.

CRAM addressing: the PA of cluster (x,y)'s CRAM is 00xy8000.

To send a message, *i.e.* to copy one MSG_SIZE-aligned MSG_SIZE block of CRAM at local address AAAA to another MSG_SIZE-aligned block of CRAM in cluster (x,y) at local address BBBB with AAAA and BBBB each in 8000-FFFF, issue a store instruction: sw 00xyBBBB,8000AAAA_{.}

The memory mapped I/O cluster NOC interface controller address range is 0x80000000-0x8000FFFF and so this exemplary store is interpreted as a message send request. In response, the cluster's NOC interface fetches the 32 byte message data payload from address AAAA in the cluster's CRAM, formats it as a NOC message destined for the cluster (or other NOC client) at router (x,y) and local address at that cluster of BBBB, and sends the message into the NOC. Later it is delivered by the NOC, to the second cluster with router (x,y), and stored to the second cluster's CRAM at address BBBB.

Cluster control: In an embodiment, a cluster control register ("CCR") manages the operation of the cluster. The PA of the CCR of cluster (x,y) is 00xy4000:
1. PA 00xy4000-00xy4003: cluster (x,y) cluster control register;
2. CCR[31:16]: reserved; write zero;
3. CCR[15:8]: per-PE interrupt: 0: no interrupt; 1: interrupt PE[z=i-8];
4. CCR[7:0] : per-PE reset: 0: run; 1: keep specific PE[z=i] in reset.

To write to a cluster (x,y)'s CCR, first store the new CCR data to local RAM at a MSG_SIZE-aligned address A, then issue sw 00xy4000,80000000(A).

In an embodiment, when a GRVI receives an interrupt via the CCR interrupt mechanism, it performs an interrupt sequence. This is defined as interrupt ::= jal x30,0x10(x0), a RISC-V instruction that transfers control to address 00000010 and saves the interrupt return address in dedicated interrupt return address register x30.

Examples:
1. A = 0x000000FF; sw 0x00104000,0x80000000(A): stop (hold in reset) all PEs of cluster (1,0).
2. A = 0x000000FE; sw 0x00104000,0x80000000(A): enable PE #0 and reset PEs #1-7 of cluster (1,0).
3. A = 0x00000000; sw 00104000,0x80000000(A): enable all PEs on cluster (1,0).
4. A = 0x00000100; sw 00104000,0x80000000(A): enable all PEs on cluster (1,0); interrupt PE#0 on cluster (1,0).
5. A = 0x0000FF00; sw 00104000,0x80000000(A): enable and interrupt all PEs on cluster (1,0).

In an embodiment, a PE must be held in reset while its IRAM is written.

Memory mapped I/O: In an embodiment, I/O addresses start at 0x80000000. The following memory address ranges represent memory mapped I/O resources:
1. 80000000-8000FFFF: Hoplite NOC interface
2. C0000000-C000003F: UART TX, RX data and CSR registers
3. C0000040: Phalanx configuration register PHXID, described below.

Processor ID: In an embodiment, each PE carries a read-only 32-bit extended processor ID register called a XID, of the format 00xyziii (8 hexadecimal digits):
1. XID[31:24]: 0: reserved;
2. XID[23:20]: x: cluster ID;
3. XID [19:16]: y: cluster ID;
4. XID[15:12]: z: index of PE in its cluster;
5. XID[11:0]: i: ordinal no. of PE in the whole Phalanx parallel computer.

For example, a system with NX=1,NY=3,NPEC=2 has 6 PEs with 6 XIDs:
1. 00000000: (PE[0] at (0,0).pe\[0\]
2. 00001001: (PE[1] at (0,0).pe\[1\])
3. 00010002: (PE[2] at (0,1).pe\[0\])
4. 00011003: (PE[3] at (0,1).pe\[1\])
5. 00020004: (PE[4] at (0,2).pe\[0\])
6. 00021005: (PE[5] at (0,2).pe\[1\])

In an embodiment, each PE's XID is obtained from its RISC-V register x31.

Phalanx Configuration: PHXID (Phalanx ID). In an embodiment, each Phalanx has a memory mapped I/O PHXID, of the format Mmxy ziii (8 hexadecimal digits) that reports the Phalanx system build parameters:
1. PHXID[31:28]: major: major version number;
2. PHXID[27:24]: minor: minor version number;
3. PHXID[23:20]: nx: number of columns in the Hoplite NOC;
4. PHXID[19:16]: ny: number of rows in the Hoplite NOC;
5. PHXID[15:12]: npec: no. of PE in each cluster;
6. PHXID[11: 0]: npe: no. of PE in the Phalanx.

Using these exemplary interfaces: With these interfaces disclosed, it is now apparent how a software workload or subroutine, loaded into an IRAM, performs its part of the overall parallel program that spans the whole parallel computer. In a nonlimiting example, each processor core will:
1. Boot at address 0 and start to run the instructions there. These instructions perform the follow steps:
2. Read its XID (register r31) to determine what processor it is, and where it is located in the parallel computer;
3. Using XID, initialize its CRAM data and pointers to reflect its PA (*i.e.* at some address rage 00xy8000-00xyFFFF) and its processor ID in the cluster. Each processor in the cluster may receive a distinct region of memory for its stack, i.e.
   00xyF800-00xyFFFF (cluster (x,y), processor 0) 00xyF000-00xyF7FF (cluster (x,y), processor 1) etc.
4. If it is processor 0 in a cluster, initialize the cluster CRAM, for example, by zeroing out the uninitialized zero data (.bss) section of the data.
5. Run the actual workload. An example is provided in the following section.

An example parallel program using these interfaces: This section of the disclosure provides, without limitation, an exemplary RISC-V assembler + C program to further illustrate how a parallel computation may be implemented in an embodiment of the disclosed parallel computer. Once a processor has booted and has performed C runtime initialization:
1. If (according to its XID) the process is processor 0 in cluster (0,0), it is the "administrator" process for the system. Its operates a worker management service that uses message passing to await and synchronize ready worker processes and to dispatch new work unit responses to available worker processes.
2. If (according to its XID) the process is not processor 0 on cluster (0,0), it is "worker" process. It prepares and sends a work-request message to the administrator process' per-worker message buffer array on cluster (0,0) with a work-request message that specifies the XID of the worker processor and the unique PA of its work-response message buffer (allocated on the stack of the worker process in its cluster's CRAM).
3. In response to receiving a work-request message from a worker process, the administrative process responds to the worker process with a work-response message, sent to the unique PA of the worker process' work-response buffer, including a description of the work to be performed.
4. In response to receiving a work-response message from the administrative process, the worker process, running on its processor core, performs the work specified by the work parameters (arguments) provided in the work-response message data by the administrative process.
5. Upon completion of the work, the worker process may repeat step 2 and request another work item from the administrative process.

The following three RISC-V assembly code and C code listings provide an exemplary implementation of this message-passing orchestrated parallel program.

In this example, pa.S implements the startup, C runtime initialization code, and Phalanx addressing helper code, in assembly:

```
    1 # pa.S
    2 # x31 = xid: 0[31:24] x[23:20] y[19:16] peid[15:12] pid[11:0]
    3
    4 _reset :
    5 ...
    6 init_sp :
    7 # Cluster memory address is 0x00xy8000-0x00xyFFFF.
    8 # Allocate a 2 KB stack per PE in this cluster.
    9 li a0,0xFFFF0000
   10 and sp, x31, a0
   11 li a0, 0x10000
   12 add sp, sp, a0
   13 li a0, 0xF000
   14 and a0, x31, a0
   15 srli a0, a0,1
   16 sub sp, sp, a0
   17 mv a0, x31
   18 jal ra,run ; call the workload run () function
   19 stop:
   20 j stop
   21 xid:
   22 mv a0, x31 # return XID
   23 ret
   24 pid:
   25 li al,OxFFF # return pid(xid)
   26 and a0, a0, a1
   27 ret
   28 sendMsg: # send message at local a0 to remote PA a1
   29 li t0,0x80000000
   30 or a0, a0, t0
   31 sw a1, 0 (a0)
   32 ret
```

In this continuing example, run.c implements the administrator process and worker process logic. Execution begins with the 'run' function which determines whether this process should run as administrator or worker, depending upon its processor ID.

```
    1 int work(int item);
    2
    3 void run(XID xid) {
    4 if (pid(xid) == 0)
    5 sysadmin(xid);
    6 else
    7 worker(xid);
    8 }
    9
   10 // System Adminstrator task.
   11 // Repeatedly synchronize all workers and reply with new work.
   12 void sysadmin(XID xid) {
   13 int n = npe(phxid());
   14
   15 for (int item = 1; ; ++item) {
   16 receiveAll (p0req, n);
   17
   18 // give each available worker a new work item
   19 for (int i = 1; i < n; ++i) {
   20 Req* preq = &p0req [i] ;
   21 reply(preq, item);
   22 }
   23 }
   24 }
   25
   26 // Worker task.
   27 void worker(XID xid) {
   28 int seqno = 0;
   29 Req chan(req) ;
   30 Resp chan(resp);
   31
   32 // zero message buffers
   33 memset(&req, 0, sizeof(req));
   34 memset(&resp, 0, sizeof(resp));
   35 // init req msg and register with admin task
   36 req.xid = xid;
   37 req.presp = &resp ; // PA of response buffer
   38 send(&req, &p0req [id]) ;
   39
  40 for (;;) {
  41 *(int*)req.buf = work(*(int*)resp.buf);
  42 // send the reply; blocks until admin replies
  43 send(&req, &p0req [id]);
  44 }
  45 }
```

In this continuing example, thoth.c is a library which implements a simple Thoth [4] message passing library, with functions send/receive/receiveAll/reply:

```
    1 // p0req: an array of message buffers, one per NPE (per
    processor
    2 // core in the machine), targeted by workers' processes to
    3 // request work from the adminstrator process, which is known
 to
    4 // be running on processor #0 at cluster (0,0).
    5
    6 Req chan (p0req [NPE])_attribute_((section(".p0req")));
    7
    8 // Send a request message to a request channel.
    9 // Block until a reply is received on the response channel.
   10 void send(Req* preq, Req*PA preqP0) {
   11 preq->full = 1;
   12 preq->presp->full = 0;
   13 sendMsg((Msg*)preq, (Chan*PA)preqP0);
   14 await (&preq->presp->full) ;
   15 }
   16
   17 // Block until all requests [1..n-1] have arrived.
   18 void receiveAll (volatile Req*PA reqs, int n) {
   19 for (;;) {
   20 int i ;
   21 for (i = 1; i < n && reqs [i].full ; ++i)
   22 ;
   23 if (i == n)
   24 return;
   25 }
   26 }
   27 ...
   28
   29 // Reply with 'arg' to the sender on its response channel.
   30 void reply(Req*PA preq, int arg) {
   31 static Resp chan(resp);
   32 *(int*)resp.buf = arg;
   33 resp.full = 1;
   34 preq->full = 0;
   35 sendMsg ((Msg*)&resp, (Chan*PA)preq->presp);
   36 }
   37
   38 // Wait for a byte to become non-zero
   39 void await(volatile char* pb) {
  40 while (!*pb)
  41 ;
  42 }
```

### Method to Send a Wide Message. Atomically, in Software, from One Processor to Another in a Different Cluster.

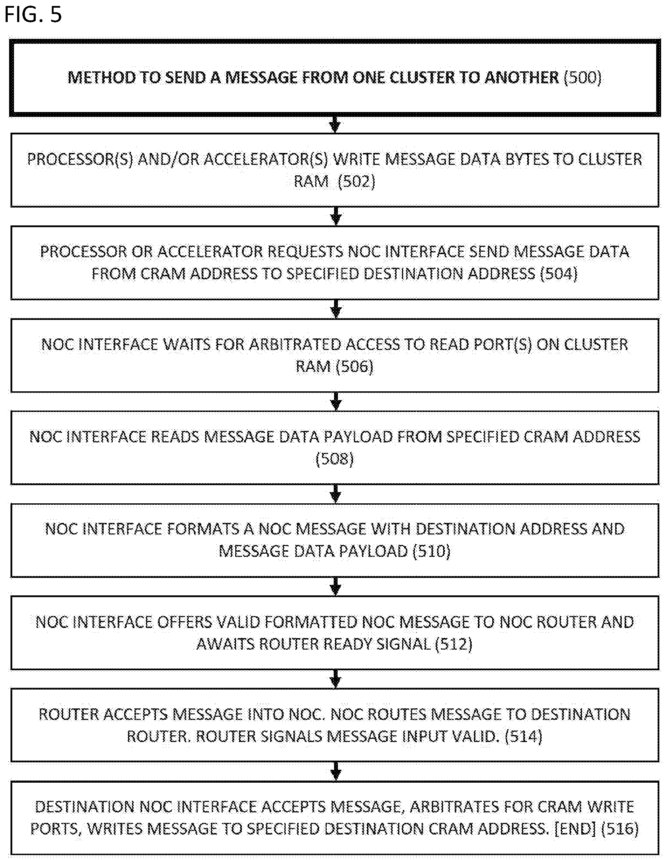

As illustrated in the prior exemplary parallel program, and in the flowchart Figure 5 method 500, processors and/or accelerators may format and send and receive messages from one cluster to a second cluster. (In some embodiments messages may also be formatted, sent, and received from a core in a cluster, through a router, and back out to the same cluster.) In the example source code above, messages are sent from a worker process on some processor core to the administrative process on core 0 of cluster (0,0), using the call to sendMsg() in thoth.c / send() / line 13; and a reply message is sent from the administrative process on core 0 of cluster (0,0) back to the worker process on some processor core, using the call to sendMsg() in thoth.c / reply() / line 35.

The first step is for one or more processor cores 220 or accelerator cores 250 to write the message data payload bytes to the cluster CRAM 230. (Step 502.)

Note that in some embodiments, a parallel application program may take advantage of a plurality of processor cores in a cluster, by having multiple cores run routines that contribute partial data to one or more message buffers in CRAM to be transmitted.

In the above examples, the library function sendMsg() is implemented in five lines of RISC-V assembly in file pa.S / lines 28-32. This code takes two 32-bit operands in registers a0 and a1; a0 is source address, in the processor's cluster's CRAM, of the 32 byte message buffer to send, and a1 is the destination address (a Phalanx address) of some router and client core (usually a computing cluster) elsewhere on the NOC, as well as a local resource address relative to that, of where to store the copy of the message when it arrives.

The assembly implementation of sendMsg() performs a memory-mapped I/O (MMIO) store to the process core's cluster's NOC interface 240. This occurs because one of the operands (here a0) is turned into (0x80000000|a0), and this is decoded by the cluster address decoder (not shown in Fig. 2) and interpreted as a MMIO to NOC interface 240. As with any target of a store instruction, the NOC interface receives two operands, an address, i.e. 0x80000000|a0 and a data word i.e. al. This is step 504, processor or accelerator requests NOC interface send message data, etc. Rather than actually performing a store, the NOC interface interprets the store as a message send request, and begins to send a copy of the message payload data at local address a0 to a destination a1 possibly in another cluster. First it arbitrates for full access to the (in this example eight way) bank-interleaved memory ports on the right hand side of CRAM 230. On any given cycle, one or more of these banks may be busy / unavailable if the cluster is at that cycle also receiving an incoming message from the NOC on message-input bus 204. (In this embodiment, delivering/storing incoming messages from the NOC router takes priority because there is no provision for buffering of incoming data. An incoming message must be delivered/stored as soon as it arrives or it will be lost.) (Step 506.) When the NOC interface message-send has access to the CRAM memory ports, it issues read of 256 bits of data in one cycle using the eight 32-bit ports on the right hand side of CRAM 230. This data is registered in output registers of the CRAM's eight constituent BRAMs and will form part of the message data payload. (Step 508.)

The NOC interface then formats up a NOC message 398 from this data and the message destination address obtained from the MMIO store (originally passed in by software in register a1 in the msgSend assembly code above). In an embodiment the Phalanx address of this destination is PA=00xyaaaa, i.e. to send the message to NOC router at coordinates (PA.x,PA.y) and deliver the up-to-32 bytes message to the 16-bit local address PA.aaaa in that cluster. Thus the formatted message 398 comprises these fields: msg = { v=1, mx=?, my=?, x=PA.x, v=PA.y, data={addr=PA.aaaa, CRAM output regs} }. The multicast flags msg.mx and msg.my are usually 0 because most message sends are point-to-point, but a NOC interface 'message send' MMIO store can also be row-multicast (msg.mx=1), column-multicast (msg.my=1), or broadcast (msg.mx=1, msg.my=1) by supplying particular distinguished 'multicast' x and y destination coordinates (in some embodiments, PA.x=15 and PA.y=15, respectively). In some embodiments it is possible to multicast to an arbitrary row or an arbitrary column of NOC routers and their client cores. (Step 510.)

Having formatted a message 398 the NOC interface offers it to the router on message-output bus 202, and awaits a signal on router control signals 206 indicating the router (and NOC) have accepted the message and it is on its way to delivery somewhere. (Step 512.) At this point, the NOC interface is ready to accept another MMIO to perform another message store on behalf of the original processor core or some other processor core in the cluster.

After the NOC accepts the message, the NOC is responsible to transporting the message to a router with matching destination coordinates (msg.x, msg.y). Depending upon the design of the NOC interconnection network, this may take 0, 1, or many cycles of operation. At some time later, the message arrives and is output on the destination router (msg.x, msg.y)'s output port and is available on the destination cluster's message-input bus 204. (Step 514.)

The destination cluster's NOC interface 240 decodes the local address component (here, msg.data.addr == PA.aaaa) to determine in what local resource, if any, into which to write the 32 byte data payload. PA.aaaa may designate, without limitation, an address in a local CRAM, or one of that cluster's IRAMs, or a register or memory in an accelerator core. If it is a local CRAM address, the 32 byte message data payload is written to the destination cluster's CRAM in one cycle, by means of, in this embodiment, eight 32-bit stores to the eight banks of address interleaved memory ports depicted on the right hand side of CRAM 230. (Step 516.)

This mechanism of preparing message buffers to be sent in CRAM, and then reading and writing and carrying extremely wide (here, eight machine words, 32 bytes) message payload data, atomically, has several advantages over prior art message send mechanisms them atomically in one cycle each. By staging messages to CRAM, which in some embodiments is uniformly accessible to the processor cores and accelerator cores of a cluster, these agents may cooperatively prepare messages to be sent and to process messages that have been received. Since messages are read from a CRAM in one cycle, and written to a destination in one cycle, messages are sent/received atomically, with no possibility of partial writes, torn writes, or interleaved writes from multiple senders to a common destination message buffer. All the bytes arrive together.

In some embodiments, the message buffers may be written by a combination of processor cores and accelerator cores, both coupled to ports on the CRAM. In some embodiments, one or more accelerators in a cluster may write data to message buffers in CRAM. In some embodiments, one or more accelerator cores in a cluster may signal the NOC interface to begin to send a message. In some embodiments, one or more accelerator cores may perform memory-mapped I/O causing the NOC interface to begin to send a message.

### Using a NOC to Interconnect a Plethora of Different Client Cores

Metcalfe's Law states that the value of a telecommunications network is proportional to the square of the number of connected users of the system. Similarly the value of a NOC and the FPGA that implements it is a function of the number and diversity of types of NOC client cores. With this principle in mind, the design philosophy and prime aspiration of the NOC disclosed herein is to "efficiently connect everything to everything."

Without limitation, many types of client cores may be connected to a NOC. Referring to Figure 1 and Figure 2, in general there are regular (on-chip) client cores 210, for example a hardened (non-programmable logic) processing subsystem 250, a soft processor 220, an on-chip memory 222 and 230, or even a multiprocessor cluster 210; and there are external-interface client cores, such as network interface controller (NIC) 140, PCI-express interface 142, DRAM channel interface 144, and HBM channel interface 146, which serve to connect the FPGA to an external interface or device. When these external-interface cores are clients of a NOC, they efficiently enable an external device to communicate with any other client of the NOC, on-chip or external, and vice versa. This section of the disclosure describes how a diversity of on-chip and external devices may be connected to an NOC and its other client cores.

One key class of external devices to interface to an FPGA NOC is a memory device. In general, a memory device may be volatile, such as static RAM (SRAM) or dynamic RAM (DRAM), including double data rate (DDR) DRAM, graphics double data rate (GDDR), quad data rate (QDR) DRAM, reduced latency DRAM (RLDRAM), Hybrid Memory Cube (HMC), WideIO DRAM, and High Bandwidth Memory (HBM) DRAM. Or a memory may be non-volatile, such as ROM, FLASH, phase-change memory, or 3DXPoint memory. Usually there is one memory channel per device or bank of devices (e.g. a DRAM DIMM memory module), but emerging memory interfaces such as HMC and HBM provide many high-bandwidth channels per device. For example, a single HBM device (die stack) provides eight channels of 128 signals at a signaling rate of 1-2 Gbps/signal.

FPGA vendor libraries and tools provide extemal-memory-channel-controller interface cores. To interconnect such a client core to a NOC, *i.e*., to interconnect the client to a router's message input port and a message output port, one can use a bridge circuit to accept memory transaction requests (*e*.*g*., load, or store, a block of bytes) from other NOC clients and present them to the DRAM channel controller, and vice versa, to accept responses from the memory channel controller, format them as NOC messages, and send them via the router to other NOC clients.

The exemplary parallel packet-processing system disclosed herein describes a NOC client that may send a DRAM store message to a DRAM controller client core to store one byte or many bytes to a particular address in RAM, or may send a DRAM load request message to cause the DRAM channel client to perform a read transaction on the DRAM, then transmit back over the NOC the resulting data to the target (cluster, processor) identified in the request message.

As another example, the exemplary FPGA SOC described above in conjunction with Figure 1 shows how a DRAM controller client may receive a command message from a PCI-express controller client core to read a block of memory and then, in response, transmit the read bytes of data over the NOC, not back to the initiating PCI express controller client core, but rather to an Ethernet NIC client core, to transmit it as a packet on some external Ethernet network.

An embodiment of the area-efficient NOC disclosed herein makes possible a system that allows any client core at any site in the FPGA, connected to some router, to access any external memory via any memory-channel-controller-client core. To fully utilize the potential bandwidth of an external memory, one may implement a very wide and very fast NOC. For example, a 64-bit DDR4 2400 interface can transmit or receive data at up to 64-bits times 2.4 GHz = approximately 150 Gbps. A Hoplite NOC of channel width w = 576 bits (512 bits of data and 64 bits of address and control) running at 333 MHz can carry up to 170 Gbps of data per link. In an FPGA with a pipelined interconnect fabric such as Altera HyperFlex, a 288-bit NOC of 288-bit routers running at 667 MHz also suffices.

In some embodiments, multiple banks of DRAM devices interconnected to the FPGA by multiple DRAM channels are employed to provide the FPGA SOC with the necessary bandwidth to meet workload-performance requirements. Although it is possible for the multiple external DRAM channels to be aggregated into a single DRAM controller client core, coupled to one router on the NOC, this may not provide the other client cores on the NOC with full-bandwidth access to the multiple DRAM channels. Instead, an embodiment provides each external DRAM channel with its own full-bandwidth DRAM channel-controller client core, each coupled to a separate NOC router, affording highly concurrent and full-bandwidth ingress and egress of DRAM request messages between the DRAM controller client cores and other clients of the NOC.

In some use cases, different memory-request NOC messages may use different minimum-bit-width messages. For example, in the exemplary parallel packet processing FPGA SOC described above in conjunction with Figures 1 and 2, a processor in a multiprocessor/accelerator cluster client core sends a DRAM store message to transfer 32 bytes from its cluster RAM to a DRAM channel-controller-interface client core. A 300 bit message (256 bits of data, 32 bits of address, control) suffices to carry the command and data to the DRAM channel controller. In contrast, to perform a memory read transaction, the processor sends a DRAM load-request message to the DRAM channel controller. Here a 64-bit message suffices to carry the address of the memory to be read from the DRAM, and the target address, within its cluster memory, receives the memory read. When this message is received and processed at a DRAM channel-controller client core, and the data read from DRAM, the DRAM channel controller sends a DRAM load-response message, where again a 300-bit message suffices. In this scenario, with some 300-bit messages and some 64-bit messages, the shorter messages may use a 300-bit-wide NOC by padding the message with 0 bits, by box-car'ing several such requests into one message, or by using other conventional techniques.

Alternatively, in other embodiments of the system, a system designer may elect to implement an SOC's DRAM memory system by instantiating in the design two parallel NOCs, a 300-bit-wide NOC and a 64-bit-wide NOC, one to carry messages with a 32 byte data payload, and the second to carry messages without such a data payload. Since the area of a Hoplite router is proportional to the bit width of its switch data path, a system with a 300-bit NOC and an additional 64-bit NOC requires less than 25% more FPGA resources than a system with one 300-bit NOC alone.

In this dual-NOC example, a client core 210 that issues DRAM-load messages is a client of both NOCs. That is, the client core 210 is coupled to a first, 300-bit-message NOC router and is also coupled to a second, 64-bit-message NOC router. An advantage of this arrangement of clients and routers is that the shorter DRAM-load- request messages may traverse their own NOC, separately, and without contending with, DRAM-store and DRAM-load-response messages that traverse their NOC. As a result, a greater total number of DRAM transaction messages may be in flight across the two NOCs at the same time, and therefore a higher total bandwidth of DRAM traffic may be served for a given area of FPGA resources and for a given expenditure of energy.

In general, the use of multiple NOCs in a system, and the selective coupling of certain client cores to certain routers of multiple NOCs, can be an advantageous arrangement and embodiment of the disclosed routers and NOCs. In contrast, in conventional NOC systems, which are much less efficient, the enormous FPGA resources and energy consumed by each NOC makes it impractical to impossible to instantiate multiple parallel NOCs in a system.

To best interface an FPGA SOC (and its many constituent client cores) to a High Bandwidth Memory (HBM) DRAM device, which provides eight channels of 128-bit data at 1-2 GHz, a system design may use, for example, without limitation, eight HBM channel-controller-interface-client cores, coupled to eight NOC router cores. A NOC with 128-Gbps links suffices to carry full-bandwidth memory traffic to and from HBM channels of 128 bits operating at 1 GHz.

Another type of die-stacked, high-bandwidth DRAM memory is Hybrid Memory Cube. Unlike HBM, which employs a very wide parallel interface, HMC links, which operate at speeds of 15 Gbps/pin, use multiple high-speed serial links over fewer pins. An FPGA interface to an HMC device, therefore, uses multiple serdes (serial/deserializer blocks) to transmit data to and from the HMC device, according to an embodiment. Despite this signaling difference, considerations of how to best couple the many client cores in an FPGA SOC to a HMC device, via a NOC, are quite similar to the embodiment of the HBM system described above. The HMC device is logically accessed as numerous high-speed channels, each typically of 64 bits wide. Each such channel might employ an HBM channel-controller-interface client core to couple that channel's data into the NOC to make the remarkable total memory bandwidth of the HMC device accessible to the many client cores arrayed on the NOC.

A second category of external-memory device, nonvolatile memory (NVM), including FLASH and next generation 3D XPoint memory, generally runs memory-channel interfaces at lower bandwidths. This may afford the use of a less-resource-intensive NOC configured with lower-bandwidth links, according to an embodiment. A narrower NOC comprising narrower links and correspondingly smaller routers, e.g., w=64 bits wide, may suffice.

Alternatively, a system may comprise an external NVM memory system comprising a great many NVM devices, e.g., a FLASH memory array, or a 3D XPoint memory array, packaged in a DIMM module and configured to present a DDR4-DRAM-compatible electrical interface. By aggregating multiple NVM devices together, high-bandwidth transfers to the devices may be achieved. In this case, the use of a high bandwidth NVM-channel-controller client core and a relatively higher-bandwidth NOC and NOC routers can provide the NOC's client cores full-bandwidth access to the NVM memory system, according to an embodiment.

In a similar manner, other memory devices and memory systems (*i.e*., compositions and arrangements of memory devices), may be interfaced to the FPGA NOC and its other clients via one or more external-memory-interface client cores, according to an embodiment.

Another category of important external interfaces for a modern FPGA SOC is a networking interface. Modern FPGAs directly support 10/100/1000 Mbps Ethernet and may be configured to support 10G/25G/40G/100G/400G bps Ethernet, as well as other external-interconnection-network standards and systems including, without limitation, Interlaken, RapidIO, and InfiniBand.

Networking systems are described using OSI reference-model layers, e.g., application/presentation/session/transport/network/data link/physical (PHY) layers. Most systems implement the lower two or three layers of the network stack in hardware. In certain network-interface controllers, accelerators, and packet processors, higher layers of the network stack are also implemented in hardware (including programmable logic hardware). For example, a TCP Offload Engine is a system to offload processing of the TCP/IP stack in hardware, at the network interface controller (NIC), instead of doing the TCP housekeeping of connection establishment, packet acknowledgement, check summing, and so forth, in software, which can be too slow to keep up with very-high-speed (e.g., 10 Gbps or faster) networks.

Within the data-link layer of an Ethernet / IEEE 802.3 system is a MAC (media-access-control circuit). The MAC is responsible for Ethernet framing and control. It is coupled to a physical interface (PHY) circuit. In some FPGA systems, for some network interfaces, the PHY is implemented in the FPGA itself. In other systems, the FPGA is coupled to a modular transceiver module, such as SFP+ format, which, depending upon the choice of module, transmits and receives data according to some electrical or optical interface standard, such as BASE-R (optical fiber) or BASE-KR (copper backplane).

Network traffic is transmitted in packets. Incoming data arrives at a MAC from its PHY and is framed into packets by the MAC. The MAC presents this framed packet data in a stream, to a user logic core, typically adjacent to the MAC on the programmable logic die.

In a system comprising the disclosed NOC, by use of an external-network-interface-controller (NIC) client core coupled to a NOC router, other NOC client cores located anywhere on the device, may transmit (or receive) network packets as one or more messages sent to (received from) the NIC client core, according to an embodiment.

Ethernet packets come in various sizes - most Ethernet frames are 64 - 1536 bytes long. Accordingly, to transmit packets over the NOC, it is beneficial to segment a packet into a series of one or more NOC messages. For example, a large 1536-Byte Ethernet frame traversing a 256-bit-wide NOC could require 48 256-bit messages to be conveyed from a NIC client core to another NOC client core or vice versa. Upon receipt of a packet (composed of messages), depending upon the packet-processing function of a client core, the client may buffer the packet in in-chip or external memory for subsequent processing, or it may inspect or transform the packet, and subsequently either discard it or immediately retransmit it (as another stream of messages) to another client core, which may be another NIC client core if the resulting packet should be transmitted externally.

To implement an embodiment of a Hoplite router NOC for interfacing to NIC client cores that transmit a network packet as a series of NOC messages, a designer can configure the Hoplite NOC routers for in-order delivery. An embodiment of the basic Hoplite router implementation, disclosed previously herein and by reference, does not guarantee that a sequence of messages M1, M2, sent from client core C1 to client core C2, will arrive in the order that the messages were sent. For example, upon sending messages M1 and M2 from client C11 at router (1,1) to client C33 at router (3,3), it may be that when message M1 arrives on the X-message input at intermediate router (3,1) via the X ring [y=1], and attempts to route to next to the router (3,2) on the Y ring [x=3], at that same moment a higher-priority input on router (3,1)'s YI input is allocated the router's Y output. Message M1, therefore, deflects to router (3,1)'s X output, and traverses the X ring [y=1] to return to router (3,1) and to reattempt egress on the router's Y output port. Meanwhile, the message M2 arrives at router (3,1) and later arrives at router (3,3) and is delivered to the client (3,3), which is coupled to the router (3,3). Message M1 then returns to router (3,1), is output on this router's Y-message output port, and is delivered to the client (3.3) of router (3,3). Therefore, the messages were sent in the order M1 then M2, but were received in the reverse order M2 then M1. For some use cases and workloads, out-of-order delivery of messages is fine. But for the present use case of delivering a network packet as a series of messages, it may be burdensome for clients to cope with out-of-order messages because a client is forced to first "reassemble" the packet before it can start to process the packet.

Therefore, in an embodiment, a Hoplite router, which has a configurable routing function, may be configured with a routing function that ensures in-order delivery of a series of messages between any specific source router and destination router. In an embodiment, this configuration option may also be combined with the multicast option, to also ensure in-order multicast delivery. In an embodiment, the router is not configurable, but it nevertheless is configured to implement in-order delivery.

Using an embodiment of the in-order message-delivery method, it is straightforward to couple various NIC client cores 140 (Figure 1) to a NOC, according to an embodiment. A message format is selected to carry the packet data as a series of messages. In an embodiment, a message may include a source-router-ID field or source-router (x,y) coordinates. In an embodiment, a message may include a message-sequence-number field. In an embodiment, these fields may be used by the destination client to reassemble the incoming messages into the image of a packet. In an embodiment, the destination client processes the packet as it arrives, message by message, from a NIC client 140. In an embodiment, packet flows and, hence, message flows, are scheduled so that a destination client may assume that all incoming messages are from one client at a time, e.g., it is not necessary to reassemble incoming messages into two or more packets simultaneously.

Many different extemal-network-interface core clients may be coupled to the NOC. A NIC client 140 may comprise a simple PHY, a MAC, or a higher-level network-protocol implementation such as a TCP Offload Engine. In an embodiment, the PHY may be implemented in the FPGA, in an external IC, or may be provided in a transceiver module, which may use electrical or optical signaling. In general, the NOC router and link widths can be configured to support full-bandwidth operation of the NOC for the anticipated workload. For 1 Gbps Ethernet, almost any width and frequency NOC will suffice, whereas for 100 Gbps Ethernet, a 64-Byte packet arrives at a NIC approximately every 6 ns; therefore, to achieve 100 Gbps bandwidth on the NOC, wide, fast routers and links, comparable to those disclosed earlier for carrying high-bandwidth DRAM messages. For example, a 256-bit-wide NOC operating at 400 MHz, or a 512-bit-wide NOC operating at 200 MHz, is sufficient to carry 100 Gbps Ethernet packets at full bandwidth between client cores.

An embodiment of an FPGA system on a chip comprises a single external network interface, and, hence, a single NIC client core on the NOC. Another embodiment may use multiple interfaces of multiple types. In an embodiment, a single NOC is adequate to interconnect these external-network-interface client cores to the other client cores on the NOC. In an embodiment, NIC client cores 140 may be connected to a dedicated high-bandwidth NOC for 'data-plane' packet routing, and to a secondary lower-bandwidth NOC for less-frequent, less-demanding 'control-plane' message routing.

Besides the various Ethernet network interfaces, implementations, and data rates described herein, many other networking and network-fabric technologies, such as RapidIO, InfiniBand, FibreChannel, and Omni-Path fabrics, each benefit from interconnection with other client cores over a NOC, using the respective interface-specific NIC client core 140, and coupling the NIC client core to its NOC router. Once an external-network-interface client core is added to the NOC, it may begin to participate in messaging patterns such as maximum-bandwidth direct transfers from NIC to NIC, or NIC to DRAM, or vice versa, without requiring intervening processing by a (relatively glacially slow) processor core and without disturbing a processor's memory hierarchy.

In an embodiment, a NOC may also serve as network switch fabric for a set of NIC client cores. In an embodiment, only some of the routers on the NOC have NIC client cores; other routers may have no client inputs or outputs. In an embodiment, these "no-input" routers can use the advantageous lower-cost NOC router-switch circuit and technology-mapping efficiencies described by reference. In an embodiment that implements multicast fanout of switched packets, the underlying NOC routers may also be configured to implement multicast routing, so that as an incoming packet is segmented by its NIC client core into a stream of messages, and these messages are sent into the NOC, the message stream is multicast to all, or to a subset, of the other NIC client cores on the NOC for output upon multiple external-network interfaces.

Another important external interface to couple to the NOC is the PCI Express (PCIe) interface. PCIe is a high-speed, serial, computer-expansion bus that is widely used to interconnect CPUs, storage devices, solid-state disks, FLASH storage arrays, graphics-display devices, accelerated network-interface controllers, and diverse other peripherals and functions.

Modern FPGAs comprise one or more PCIe endpoint blocks. In an embodiment, a PCIe master or slave endpoint is implemented in an FPGA by configuring an FPGA's PCIe endpoint block and configuring programmable logic to implement a PCIe controller. In an embodiment, programmable logic also implements a PCIe DMA controller so that an application in the FPGA may issue PCIe DMA transfers to transfer data from the FPGA to a host or vice-versa.

In an embodiment, an FPGA PCIe controller, or a PCIe DMA controller, may be coupled to a NOC by means of a PCIe interface client core, which comprises a PCIe controller and logic for interfacing to a NOC router. A PCIe interface client core enables advantageous system use cases. In an embodiment, any client core on the NOC may access the PCIe interface client core, via the NOC, by sending NOC messages that encapsulate PCI Express read and write transactions. Therefore, recalling the prior exemplary network-packet-processing system described above in conjunction with Figures 1 and 2, if so configured, any of the 400 cores or the accelerators in the clustered multiprocessor might access memory in a host computer by preparing and sending a PCI Express transaction request message to a PCI Express interface client core via the NOC. The latter core receives the PCI Express transaction-request message and issues it into the PCI express message fabric via its PCI Express endpoint and PCIe serdes PHY. Similarly, in an embodiment, any on-chip embedded memory or any external memory devices attached to the FPGA may be remotely accessed by a PCIe-connected host computer or by another PCIe agent. In this example, the PCIe interface client core receives the local-memory access request from its PCIe endpoint, formats and sends a cluster memory read- or write-request message that is routed by the NOC to a specific multiprocessor cluster client, whose router address on the NOC is specified by certain bits in the read- or write-request message.

In an embodiment, in addition to facilitating remote single-word read or write transactions, external hosts and on-die client cores may utilize a PCIe DMA (direct memory access) engine capability of a PCIe interface client core to perform block transfers of data from host memory, into the PCIe interface client, and then sent via the NOC to a specific client core's local memory. In an embodiment, the reverse is also supported - transferring a block of data from a specific client core's memory , or vice-versa, from the memory of a specific client core on the NOC, to the PCIe interface client core, and then as a set of PCIe transaction messages, to a memory region on a host or other PCIe-interconnected device.

Recalling, as described above, that a NOC may also serve as network switch fabric for a set of NIC client cores, in the same manner, in an embodiment, a NOC may also serve as a PCIe switch fabric for a set of PCIe client cores. As external PCIe transaction messages reach a PCIe interface client core, they are encapsulated as NOC messages and sent via the NOC to a second PCIe interface client core, and then are transmitted externally as PCIe transaction messages to a second PCIe attached device. As with the network switch fabric, in an embodiment a PCIe switch fabric may also take advantage of NOC multicast routing to achieve multicast delivery of PCIe transaction messages.

Another important external interface in computing devices is SATA (serial advanced technology attachment), which is the interface by which most storage devices, including hard disks, tapes, optical storage, and solid-state disks (SSDs), interface to computers. Compared to DRAM channels and 100 Gbps Ethernet, the 3/6/16 Gbps signaling rates of modern SATA are easily carried on relatively narrow Hoplite NOC routers and links. In an embodiment, SATA interfaces may be implemented in FPGAs by combining a programmable-logic SATA controller core and an FPGA serdes block. Accordingly, in an embodiment, a SATA interface Hoplite client core comprises the aforementioned SATA controller core, serdes, and a Hoplite router interface. A NOC client core sends storage-transfer-request messages to the SATA interface client core, or in an embodiment, may copy a block of memory to be written or a block of memory to be read, to/from a SATA interface client core as a stream of NOC messages.

Besides connecting client cores to specific external interfaces, a NOC can provide an efficient way for diverse client cores to interconnect to, and exchange data with, a second interconnection network. Here are a few non-limiting examples. In an embodiment, for performance scalability reasons, a very large system may comprise a hierarchical system of interconnects such as a plurality of secondary interconnection networks that themselves comprise, and are interconnected by, a NOC into an integrated system. In an embodiment, these hierarchical NOCs routers may be addressed using 3D or higher-dimensional coordinates, e.g., router (x,y,i,j) is the (i,j) router in the secondary NOC found on the global NOC at global NOC router (x,y). In an embodiment, a system may be partitioned into separate interconnection networks for network management or security considerations, and then interconnected, via a NOC, with message filtering between separate networks. In an embodiment, a large system design may not physically fit into a particular FPGA, and, therefore, is partitioned across two or more FPGAs. In this example, each FPGA comprises its own NOC and client cores, and there is a need for some way to bridge sent messages so that clients on one NOC may conveniently communicate with clients on a second NOC. In an embodiment, the two NOCs in two different devices are bridged; in another embodiment, the NOCs segments are logically and topologically one NOC, with message rings extending between FPGA devices and messages circulating between FPGAs using parallel, high-speed I/O signaling, now available in modern FPGAs, such as Xilinx RXTXBITSLICE IOBs. In an embodiment, a NOC may provide a high-bandwidth "superhighway" between client cores, and the NOC's client cores themselves may have constituent subcircuits interconnected by other means. A specific example of this is the multiprocessor/accelerator-compute-cluster client core diagrammed in Figure 1 and described in the exemplary packet-processing system described herein. Referring to Figure 2, in this example, the local interconnection network is a multistage switch network of 2:1 concentrators 224, a 4x4 crossbar 226, and a multi-ported cluster-shared memory 230.

In each of these examples, clients of these varied interconnect networks may be advantageously interconnected into an integrated whole by means of treating the various subordinate interconnection networks themselves as an aggregated client core of a central Hoplite NOC. As a client core, the subordinate interconnection network comprises a NOC interface by which means it connects to a Hoplite NOC router and sends and receives messages on the NOC. In Figure 2, the NOC interface 240 coordinates sending of messages from CRAM 230 or accelerator 250 to the router 200 on its client input 202, and receiving of messages from the router on its Y-message output port 204 into the CRAM 230 or accelerator 250, or into a specific IRAM 222.

Now turning to the matter of interconnecting together as many internal (on-chip) resources and cores together as possible via a NOC, one of the most important classes of internal-interface client cores is a "standard-IP-interface" bridge client core. A modern FPGA SOC is typically a composition of many prebuilt and reusable "IP" (intellectual property) cores. For maximal composability and reusability, these cores generally use industry-standard peripheral interconnect interfaces such as AXI4, AXI4 Lite, AXI4-Stream, AMBA AHB, APB, CoreConnect, PLB, Avalon, and Wishbone. In order to connect these preexisting IP cores to one another and to other clients via a NOC, a "standard-IP-interface" bridge client core is used to adapt the signals and protocols of the IP interface to NOC messages and vice versa.

In some cases, a standard-IP-interface bridge client core is a close match to the NOC messaging semantics. An example is AXI4-Stream, a basic unidirectional flow-controlled streaming IP interface with ready/valid handshake signals between the master, which sends the data, and the slave, which receives the data. An AXI4-Stream bridge NOC client may accept AXI4-Stream data as a slave, format the data into a NOC message, and send the NOC message over the NOC to the destination NOC client, where (if the destination client is also an AXI4-Stream IP bridge client core) a NOC client core receives the message and provides the stream of data, acting as an AXI4-Stream master, to its slave client. In an embodiment, the NOC router's routing function is configured to deliver messages in order, as described above. In an embodiment, it may be beneficial to utilize an elastic buffer or FIFO to buffer either incoming AXI4-Stream data before it is accepted as messages on the NOC (which may occur if the NOC is heavily loaded), or to use a buffer at the NOC message output port to buffer the data until the AXI4-Stream consumer becomes ready to accept the data. In an embodiment, it is beneficial to implement flow control between source and destination clients so that (e.g., when the stream consumer negates its ready signal to hold off stream-data delivery for a relatively long period of time) the message buffer at the destination does not overflow. In an embodiment, flow control is credit based, in which case the source client "knows" how many messages may be received by the destination client before its buffer overflows. Therefore, the source client sends up to that many messages, then awaits return credit messages from the destination client, which return credit messages signal that buffered messages have been processed and more buffer space has freed up. In an embodiment, this credit return message flows over the first NOC; in another embodiment, a second NOC carries credit-return messages back to the source client. In this case, each AXI4-Stream bridge client core is a client of both NOCs.

The other AXI4 interfaces, AXI4 and AXI4-Lite, implement transactions using five logical unidirectional channels that each resemble the AXI4-Stream, with ready/valid handshake flow-controlled interfaces. The five channels are Read Address (master to slave), Read Data (slave to master), Write Address (master to slave), Write Data (master to slave), and Write Response (slave to master). An AXI4 master writes to a slave by writing write transactions to the Write Address and Write Data channels and receiving responses on the Write Response channel. A slave receives write-command data on the Write Address and Write Data channels and responds by writing on the Write Response Channel. A master performs reads from a slave by writing read-transaction data to the Read Address channel and receiving responses from the Read Response channel. A slave receives read-command data on the Read Address channel and responds by writing data to the Read Response channel.

An AXI4 master or slave bridge converts the AXI4 protocol messages into NOC messages and vice-versa. In an embodiment, each AXI4 datum received on any of its five constituent channels is sent from a master (or slave) as a separate message over the NOC from source router (master (or slave)) to destination router (slave (or master)) where, if there is a corresponding AXI slave/master bridge, the message is delivered on the corresponding AXI4 channel. In another embodiment with higher performance, each AXI4 bridge collects as much AXI4 channel data as it can in a given clock cycle from across all of its input AXI4 input channels, and sends this collected data as a single message over the NOC to the destination bridge, which unpacks it into its constituent channels. In another embodiment, a bridge client waits until it receives enough channel data to correspond to one semantic request or response message such as "write request (address, data)" or "write response" or "read request(address)" or "read response(data)," and then sends that message to the destination client. This approach may simplify the interconnection of AXI4 masters or slaves to non-AXI4 client cores elsewhere on the NOC.

Thus a NOC-intermediated AXI4 transfer from an AXI4 master to an AXI4 slave actually traverses an AXI4 master to an AXI4 slave bridge-client core to a source router through the NOC to a destination router to an AXI4 master bridge-client core to the AXI4 slave (and vice-versa for response channel messages). As in the above description of AXI4-Stream bridging, in an embodiment it may be beneficial to implement credit-based flow control between client cores.

In a similar way, other IP interfaces described herein, without limitation, may be bridged to couple clients of those IP interfaces to the NOC, and thereby to other NOC clients.

An "AXI4 Interconnect IP" core is a special kind of system core whose purpose is to interconnect the many AXI4 IP cores in a system. In an embodiment, a Hoplite NOC plus a number of AXI4 bridge-client cores may be configured to implement the role of "AXI4 Interconnect IP", and, as the number of AXI4 clients or the bandwidth requirements of clients scales up well past ten cores, this extremely efficient NOC + bridges implementation can be the highest-performance, and most resource-and-energy-efficient, way to compose the many AXI4 IP cores into an integrated system.

Another important type of internal NOC client is an embedded microprocessor. As described above, particularly in the description of the packet-processing system, an embedded processor may interact with other NOC clients via messages, to perform such functions as: read or write a byte, half word, word, double word, or quad word of memory or I/O data; read or write a block of memory; read or write a cache line; transmit a MESI cache-coherence message such as read, invalidate, or read for ownership; convey an interrupt or interprocessor interrupt; to explicitly send or receive messages as explicit software actions; to send or receive command or data messages to an accelerator core; to convey performance trace data; to stop, reset, or debug a processor; and many other kinds of information transfer amenable to delivery as messages. In an embodiment, an embedded-processor NOC client core may comprise a soft processor. In an embodiment, an embedded-processor NOC client core may comprise a hardened, full-custom "SOC" subsystem such as an ARM processor core in the Xilinx Zynq PS (processing subsystem). In an embodiment, a NOC client core may comprise a plurality of processors. In an embodiment, a NOC may interconnect a processor NOC client core and a second processor NOC client core.

The gradual slowing of conventional microprocessor-performance scaling, and the need to reduce energy per datacenter workload motivates FPGA acceleration of datacenter workloads. This in turn motivates deployment of FPGA accelerator cards connected to multiprocessor server sockets via PCI Express in datacenter server blades. Over several design generations, FPGAs will be coupled ever closer to processors.

Close integration of FPGAs and server CPUs can include advanced packaging wherein the server CPU die and the FPGA die are packaged side by side via a chip-scale interconnect such as Xilinx 2.5D Stacked Silicon Integration (SSI) or Intel Embedded Multi-Die Interconnect bridge (EMIB). Here an FPGA NOC client is coupled via the NOC, via an "external coherent interface" bridge NOC client, and via the external coherent interface, to the cache coherent memory system of the server CPU die. The external interconnect may support cache-coherent transfers and local-memory caching across the two dies, employing technologies such as, without limitation, Intel QuickPath Interconnect or IBM/OpenPower Coherence Attach Processor Interface (CAPI). This advance will make it more efficient for NOC clients on the FPGA to communicate and interoperate with software threads running on the server processors.

FPGA-server CPU integration can also include embedding an FPGA fabric onto the server CPU die, or equivalently, embed server CPU cores onto the FPGA die. Here it is imperative to efficiently interconnect FPGA-programmable accelerator cores to server CPU cores and other fixed-function accelerator cores on the die. In this era, the many server CPU cores will be interconnected to one another and to the "uncore" (*i*.*e.,* the rest of the chip excluding CPU cores and FPGA fabric cores) via an uncore-scalable interconnect fabric such as a 2D torus. The FPGA fabric resources in this SOC may be in one large contiguous region or may be segmented into smaller tiles located at various sites on the die (and logically situated at various sites on the 2D torus). Here an embodiment of the disclosed FPGA NOC will interface to the rest of the SOC using "FPGA-NOC-to-uncore-NOC" bridge FPGA-NOC client cores. In an embodiment, FPGA NOC routers and uncore NOC routers may share the router addressing scheme so that messages from CPUs, fixed logic, or FPGA NOC client cores may simply traverse into the hard uncore NOC or the soft FPGA NOC according to the router address of the destination router. Such a tightly coupled arrangement facilitates efficient, high-performance communication amongst FPGA NOC client cores, uncore NOC client cores, and server CPUs cores.

Modern FPGAs comprise hundreds of embedded block RAMs, embedded fixed-point DSP blocks, and embedded floating-point DSP blocks, distributed at various sites all about the device. One FPGA system-design challenge is to efficiently access these resources from many clients at other sites in the FPGA. An FPGA NOC makes this easier.

Block RAMs are embedded static RAM blocks. Examples include 20 Kbit Altera M20Ks, 36 Kbit Xilinx Block RAMs, and 288 Kbit Xilinx Ultra RAMs. As with other memory interface NOC client cores described above, a block RAM NOC client core receives memory-load or store-request messages, performs the requested memory transaction against the block RAM, and (for load requests) sends a load-response message with the loaded data back to the requesting NOC client. In an embodiment, a block RAM controller NOC client core comprises a single block RAM. In an embodiment, a block RAM controller NOC client core comprises an array of block RAMs. In an embodiment, the data bandwidth of an access to a block RAM is not large - up to 10 bits of address and 72 bits of data at 500 MHz. In another embodiment employing block RAM arrays, the data bandwidth of the access can be arbitrarily large. For example, an array of eight 36 Kbit Xilinx block RAMs can read or write 576 bits of data per cycle, *i.e.,* up to 288 Gbps. Therefore, an extremely wide NOC of 576 to 1024 bits may allow full utilization of the bandwidth of one or more of such arrays of eight block RAMs.

Embedded DSP blocks are fixed logic to perform fixed-point wide-word math functions such as add and multiply. Examples include the Xilinx DSP48E2 and the Altera variable-precision DSP block. An FPGA's many DSP blocks may also be accessed over the NOC via a DSP NOC client core. The latter accepts a stream of messages from its NOC router, each message encapsulating an operand or a request to perform one or more DSP computations; and a few cycles later, sends a response message with the results back to the client. In an embodiment, the DSP function is configured as a specific fixed operation. In an embodiment, the DSP function is dynamic and is communicated to the DSP block, along with the function operands, in the NOC message. In an embodiment, a DSP NOC client core may comprise an embedded DSP block. In an embodiment, a DSP NOC client core may comprise a plurality of embedded DSP blocks.

Embedded floating-point DSP blocks are fixed logic to perform floating-point math functions such as add and multiply. One example is the Altera floating-point DSP block. An FPGA's many floating-point DSP blocks and floating-point enhanced DSP blocks may also be accessed over the NOC via a floating-point DSP NOC client core. The latter accepts a stream of messages from its NOC router, each message encapsulating an operand or a request to perform one or more floating-point computations; and a few cycles later, sends a response message with the results back to the client. In an embodiment, the floating-point DSP function is configured as a specific fixed operation. In an embodiment, the floating-point DSP function is dynamic and is communicated to the DSP block, along with the function operands, in the NOC message. In an embodiment, a floating-point DSP NOC client core may comprise an embedded floating-point DSP block. In an embodiment, a DSP NOC client core may comprise a plurality of floating-point embedded DSP blocks.

A brief example illustrates the utility of coupling the internal FPGA resources, such as block RAMs and floating-point DSP blocks, with a NOC so that they may be easily and dynamically composed into a parallel-computing device. In an embodiment, in an FPGA, each of the hundreds of block RAMs and hundreds of floating-point DSP blocks are coupled to a NOC via a plurality of block RAM NOC client cores and floating-point DSP NOC client cores. Two vectors A[] and B[] of floating-point operands are loaded into two block RAM NOC client cores. A parallel dot product of the two vectors may be obtained by means of 1) the two vectors' block RAMs contents are streamed into the NOC as messages and both sent to a first floating-point DSP NOC client core, which multiplies them together; the resulting stream of elementwise products is sent by the first floating-point DSP NOC client core via the NOC to a second floating-point DSP NOC client core, which adds each product together to accumulate a dot product of the two vectors. In another embodiment, two NxN matrices A[,] and B[,] are distributed, row-wise and column-wise, respectively, across many block RAM NOC client cores; and an arrangement of NxN instances of the prior embodiment's dot-product pipeline are configured so as to stream each row of A and each column of B into a dot-product pipeline instance. The results of these dot-product computations are sent as messages via the NOC to a third set of block RAM NOC client cores that accumulate the matrix-multiply-product result C[,]. This embodiment performs a parallel, pipelined, high-performance floating-point matrix multiply. In this embodiment, all of the operands and results are carried between memories and function units over the NOC. It is particularly advantageous that the data-flow graph of operands and operations and results is not fixed in wires nor in a specific programmable-logic configuration, but rather is dynamically achieved by simply varying the (x,y) destinations of messages between resources sent via the NOC. Therefore, a data-flow-graph fabric of memories and operators may be dynamically adapted to a workload or computation, cycle by cycle, microsecond by microsecond.

Another important FPGA resource is a configuration unit. Some examples include the Xilinx ICAP (Internal Configuration Access Port) and PCAP (Processor Configuration Access Port). A configuration unit enables an FPGA to reprogram, dynamically, a subset of its programmable logic, also known as "partial reconfiguration", to dynamically configure new hardware functionality into its FPGA fabric. By coupling an ICAP to the NOC by means of a configuration unit NOC client core, the ICAP functionality is made accessible to the other client cores of the NOC. For example, a partial-reconfiguration bitstream, used to configure a region of the programmable logic fabric, may be received from any other NOC client core. In an embodiment, the partial-reconfiguration bitstream is sent via an Ethernet NIC client core. In an embodiment, the partial-reconfiguration bitstream is sent via a DRAM channel NOC client core. In an embodiment, the partial-reconfiguration bitstream is sent from a hardened embedded-microprocessor subsystem via an embedded-processor NOC client core.

In a dynamic-partial-reconfiguration system, the partially reconfigurable logic is generally floor planned into specific regions of the programmable logic fabric. A design challenge is how this logic may be best communicatively coupled to other logic in the system, whether fixed programmable logic or more dynamically reconfigured programmable logic, anticipating that the logic may be replaced by other logic in the same region at a later moment. By coupling the reconfigurable logic cores to other logic by means of a NOC, it becomes straightforward for any reconfigurable logic to communicate with non-reconfigurable logic and vice versa. A partial-reconfig NOC client core comprises a partial-reconfig core designed to directly attach to a NOC router on a fixed set of FPGA nets (wires). A series of different partial-reconfig NOC client cores may be loaded at a particular site in an FPGA. Since each reconfiguration directly couples to the NOC router's message input and output ports, each enjoys full connectivity with other NOC client cores in the system.

### Additional Aspects

In an embodiment, a data parallel compiler and runtime, such as, in some embodiments, an OpenCL compiler and runtime targets the many soft processors 220 and configured accelerator cores of the parallel computing system. In embodiment, an OpenCL compiler and runtime implements some OpenCL kernels in software, executed on a plurality of soft processors 220, and some kernels in hardware accelerator cores, connected as client cores on the NOC 150 or as configured accelerator cores 250 in clusters 250 in the system.

In an embodiment, accelerator cores 250 may be synthesized by a high level synthesis tool. In an embodiment, NOC client cores may be synthesized by a high level synthesis tool.

In an embodiment, a system floor-planning EDA tool incorporates configuration and floor planning of a parallel computing system and NOC topologies, and may be used to place and interconnect client core blocks to routers of the NOC.

Some applications of an embodiment include, without limitation, 1) reusable modular "IP" NOCs, routers, and switch fabrics, with various interfaces including AXI4; 2) interconnecting FPGA subsystem client cores to interface controller client cores, for various devices, systems, and interfaces, including DRAMs and DRAM DIMMs, in-package 3D die stacked or 2.5D stacked silicon interposer interconnected HBM/WideIO2/HMC DRAMs, SRAMs, FLASH memory, PCI Express, 1G/10G/25G/40G/100G/400G networks, FibreChannel, SATA, and other FPGAS; 3) as a component in parallel-processor overlay networks; 4) as a component in OpenCL host or memory interconnects; 5) as a component as configured by a SOC builder design tool or IP core integration electronic design automation tool; 4) use by FPGA electronic design automation CAD tools, particularly floor-planning tools and programmable-logic placement and routing tools, to employ a NOC backbone to mitigate the need for physical adjacency in placement of subsystems, or to enable a modular FPGA implementation flow with separate, possibly parallel, compilation of a client core that connects to the rest of system through a NOC client interface; 6) used in dynamic-partial-reconfiguration systems to provide high-bandwidth interconnectivity between dynamic-partial-reconfiguration blocks, and via floor planning to provide guaranteed logic- and interconnect-free "keep-out zones" for facilitating loading new dynamic-logic regions into the keep-out zones, and 7) use of the disclosed parallel computer, router and NOC system as a component or plurality of components, in computing, datacenters, datacenter application accelerators, high-performance computing systems, machine learning, data management, data compression, deduplication, databases, database accelerators, networking, network switching and routing, network processing, network security, storage systems, telecom, wireless telecom and base stations, video production and routing, embedded systems, embedded vision systems, consumer electronics, entertainment systems, automotive systems, autonomous vehicles, avionics, radar, reflection seismology, medical diagnostic imaging, robotics, complex SOCs, hardware emulation systems, and high frequency trading systems.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments to which such claims are entitled. Accordingly, the claims are not limited by the disclosure.

## Claims

1. A cluster circuit (210), comprising:
a message input bus (204) configured to be coupled to a router circuit (200) that forms part of an on integrated circuit chip interconnection network (150);
a message output bus (202) configured to be coupled to the router circuit;
a computing circuit (220, 222, 224, 226, 230, 250); and
an interface circuit (240) coupled to the computing circuit, the message input bus, and the message output bus, and configured
to receive, from the computing circuit, a request to send a message that includes payload data,
to generate, in response to the request, a message (398) that includes a destination indicator (398 x,y) and the payload data (398 data), and
to cause the message to be provided on the message output bus,
**characterized in that**
the network (150) is configured as a two dimensional directional torus interconnection network,
the router circuit is configured to be coupled into a first dimension unidirectional ring of the network by a first dimension output bus (310) of the router circuit coupled to a first dimension input bus (302) of another router circuit in the first dimension unidirectional ring, and a first dimension input bus (302) of the router circuit coupled to a first dimension output bus (310) of another router circuit in the first dimension unidirectional ring, and
the router circuit is configured to be coupled into a second dimension unidirectional ring of the network by a second dimension output bus (312) of the router circuit coupled to a second dimension input bus (304) of another router circuit in the second-dimension unidirectional ring, and a second dimension input bus (304) of the router circuit coupled to a second dimension output bus (312) of another router circuit in the second dimension unidirectional ring.

2. The cluster circuit of claim 1 wherein the computing circuit includes one or more instruction executing computing cores (220).

3. The cluster circuit of claim 1 wherein the computing circuit includes one or more of a non instruction executing accelerator circuit (250) or a configurable accelerator circuit (250) or a runtime reconfigurable circuit (250).

4. The cluster circuit of claim 1, further comprising:
a memory circuit coupled to the message-output bus;
wherein the interface circuit is further configured
to receive, from the computing circuit as part of the request to send a message, an address of a location in the memory circuit at which the payload is stored, and a destination of the payload,
to generate the destination indicator including the destination indicator (398 x,y) of the payload, and
to cause the message (398) to be placed onto the message output bus by providing the destination indicator on the message output bus, and by causing the memory circuit to provide the contents of the location on the message output bus.

5. The cluster circuit of claim 1, further comprising:
a memory circuit including a shared memory having a first group of one or more shared-memory ports coupled to the message-input bus and to the message-output bus, and having a second group of one or more shared-memory ports;
a multiplexer circuit having a first group of multiplexer ports, and having a second group of one or more multiplexer ports coupled to the second group of one or more shared-memory ports; and
wherein the computing circuit includes instruction executing computing cores (220) respectively coupled to the first group of multiplexer ports, and one or more configurable accelerators (250) coupled to the message input bus, the message output bus, and to the first group of one or more shared memory ports.

6. The cluster circuit of claim 1, further comprising:
a memory circuit (230) including a shared memory having a first group of one or more shared memory ports coupled to the message input bus (204) and to the message output bus (202), having a second group of shared memory ports, and having a third group of one or more shared memory ports; and
wherein the computing circuit includes
instruction executing computing cores (220) respectively coupled to the second group of shared memory ports, and
one or more configurable accelerators (250) respectively coupled to the third group of one or more shared memory ports.

7. The cluster circuit of claim 1, further comprising:
a memory circuit including instruction memories (222) each having a respective first instruction memory port coupled to the message input bus (204), and each having second instruction memory ports; and
wherein the computing circuit includes instruction executing computing cores (220) each coupled to a respective one of the second instruction memory ports.

8. The cluster circuit of claim 1, further comprising:
a memory circuit (230) including a shared memory having first shared memory ports coupled to the message input bus (204) and to the message output bus (202), and having second shared memory ports;
a multiplexer circuit (224, 226) having first multiplexer ports, and having second multiplexer ports coupled to the second shared memory ports;
wherein the computing circuit includes
instruction executing computing cores (220) respectively coupled to the first multiplexer ports, and
one or more configurable accelerators (250) coupled to the first shared memory ports;
wherein the interface circuit (240) is configured
to receive, from the router (200), an indication (318) that a message (398) for one or more of the instruction executing computing cores is on a router output bus that is coupled to the message input bus,
in response to the indication, to cause the message to be coupled from the router output bus to the message input bus, and
to cause a payload of the message (398 data) to be stored in a location of the shared memory; and
wherein the one or more of the instruction executing computing cores are configured to retrieve the payload from the location of the shared memory.

9. The cluster circuit of claim 1, further comprising:
a memory circuit (230) including a shared memory having first shared memory ports coupled to the message input bus (204) and to the message output bus (202), and having second shared memory ports;
a multiplexer circuit (224, 226) having first multiplexer ports, and having second multiplexer ports coupled to the second shared memory ports;
wherein the computing circuit includes
instruction executing computing cores (220) respectively coupled to the first multiplexer ports, and
one or more configurable accelerators (250) coupled to the first shared memory ports;
wherein the interface circuit (240) is configured:
to receive, from the router (200), an indication (318) that a message (398) for one or more of the configurable accelerators is on a router output bus that is coupled to the message input bus,
in response to the indication, to cause the message to be coupled from the router output bus to the message input bus; and
wherein the one or more of the configurable accelerators are configured to retrieve the payload data from the message input bus.

10. The cluster circuit of claim 1 wherein one or more of the message input bus (204), the message output bus (204), the computing circuit (220, 222, 224, 226, 230, 250), and the interface circuit (240) are instantiated on a field programmable gate array (102).

11. The cluster circuit of claim 1 wherein the message-input bus (204) is coupled to the first-dimension output bus (310) of the router circuit (200) or to the second-dimension output bus (312) of the router circuit.

12. The cluster circuit of claim 1 wherein the computing circuit includes a plurality of instruction-executing computing cores (220) coupled to a plurality of memory ports on a cluster shared data memory (230) by one or more of direct-connection, time-division multiplexing, bus multiplexers (224), crossbar (226), and ring interconnects.

13. The cluster circuit of claim 1 wherein the router circuit is instantiated on a field-programmable gate array (102), and wherein one dual-output lookup table of the field-programmable gate array is configured to input one bit on the router's first-dimension input (302), one bit on the second-dimension input (304), and one bit on the client input (306), and is further configured to output one bit on the first-dimension output (310) and one bit on the second-dimension output (312).

14. The cluster circuit of claim 5 wherein an instruction memory (222) is instantiated in one dual-port block RAM of a field-programmable gate array, configured with a first port write data bus of the block RAM coupled to the message-input bus (204), and with first and second port read data buses of the block RAM coupled to first and second instruction-executing computing cores (220), respectively.

15. The cluster circuit of claim 4 wherein one block RAM memory of a field-programmable gate array implements one dual-port bank of the shared memory (230) including one first shared-memory port and one second shared-memory port.

16. The cluster circuit of claim 1 wherein the router circuit (200) is further configured to deflect a message to a second router output port in response to router-output-port contention.

## Patentansprüche

1. Clusterschaltung (210), umfassend:
einen Nachrichteneingangsbus (204), der dazu eingerichtet ist, an eine Routerschaltung (200) gekoppelt zu werden, die einen Teil eines auf einem integrierten Schaltungschip befindlichen Verbindungsnetzes (150) bildet;
einen Nachrichtenausgangsbus (202), der dazu eingerichtet ist, an die Routerschaltung gekoppelt zu werden;
eine Rechnerschaltung (220, 222, 224, 226, 230, 250); und
eine Schnittstellenschaltung (240), die an die Rechnerschaltung, den Nachrichteneingangsbus und den Nachrichtenausgangsbus gekoppelt und dazu eingerichtet ist,
eine Anfrage von der Rechnerschaltung zu empfangen, eine Nachricht zu senden, die Nutzdaten beinhaltet,
eine Nachricht (398) ansprechend auf die Anfrage zu erzeugen, die einen Zielindikator (398 x, y) und die Nutzdaten (398 Daten) beinhaltet, und
zu veranlassen, dass die Nachricht auf dem Nachrichtenausgangsbus bereitgestellt wird,
**dadurch gekennzeichnet, dass**
das Netz (150) als ein zweidimensionales direktionales Torus-Verbindungsnetz konfiguriert ist,
die Routerschaltung dazu eingerichtet ist, in einen zur ersten Dimension gehörigen unidirektionalen Ring des Netzes eingekoppelt zu werden, und zwar durch einen zur ersten Dimension gehörigen Ausgangsbus (310) der Routerschaltung, die an einen zur ersten Dimension gehörigen Eingangsbus (302) einer weiteren Routerschaltung in dem zur ersten Dimension gehörigen unidirektionalen Ring gekoppelt ist, und durch einen zur ersten Dimension gehörigen Eingangsbus (302) der Routerschaltung, die an einen zur ersten Dimension gehörigen Ausgangsbus (310) einer weiteren Routerschaltung in dem zur ersten Dimension gehörigen unidirektionalen Ring gekoppelt ist, und
die Routerschaltung dazu eingerichtet ist, in einen zur zweiten Dimension gehörigen unidirektionalen Ring des Netzes eingekoppelt zu werden, und zwar durch einen zur zweiten Dimension gehörigen Ausgangsbus (312) der Routerschaltung, die an einen zur zweiten Dimension gehörigen Eingangsbus (304) einer weiteren Routerschaltung in dem zur zweiten Dimension gehörigen unidirektionalen Ring gekoppelt ist, und durch einen zur zweiten Dimension gehörigen Eingangsbus (304) der Routerschaltung, die an einen zur zweiten Dimension gehörigen Ausgangsbus (312) einer weiteren Routerschaltung in dem zur zweiten Dimension gehörigen unidirektionalen Ring gekoppelt ist.

2. Clusterschaltung nach Anspruch 1, wobei die Rechnerschaltung einen oder mehrere Anweisungsausführungstechnerkerne (220) beinhaltet.

3. Clusterschaltung nach Anspruch 1, wobei die Rechnerschaltung eine oder mehrere Nichtanweisungsausführungsbeschleunigungsschaltungen (250) oder eine konfigurierbare Beschleunigungsschaltung (250) oder eine zur Laufzeit rekonfigurierbare Schaltung (250) beinhaltet.

4. Clusterschaltung nach Anspruch 1, ferner umfassend:
eine Speicherschaltung, die an den Nachrichtenausgangsbus gekoppelt ist;
wobei die Schnittstellenschaltung ferner dazu eingerichtet ist,
von der Rechnerschaltung als Teil der Anfrage zum Senden einer Nachricht zu empfangen: eine Adresse eines Ortes in der Speicherschaltung, bei der die Nutzdaten gespeichert sind, und ein Ziel der Nutzdaten,
den Zielindikator zu erzeugen, der den Zielindikator (398 x, y) der Nutzdaten beinhaltet, und
zu veranlassen, dass die Nachricht (398) auf dem Nachrichtenausgangsbus platziert wird, und zwar dadurch, dass der Zielindikator auf dem Nachrichtenausgangsbus bereitgestellt wird, und dadurch, dass die Speicherschaltung veranlasst wird, die Inhalte des Ortes auf dem Nachrichtenausgangsbus bereitzustellen.

5. Clusterschaltung nach Anspruch 1, ferner umfassend:
eine Speicherschaltung, die einen gemeinsam genutzten Speicher beinhaltet, der aufweist: eine erste Gruppe von einem oder mehreren Anschlüssen des gemeinsam genutzten Speichers, die an den Nachrichteneingangsbus und den Nachrichtenausgangsbus gekoppelt sind, und eine zweite Gruppe von einem oder mehreren Anschlüssen des gemeinsam genutzten Speichers;
eine Multiplexerschaltung, die eine erste Gruppe von Multiplexeranschlüssen und eine zweite Gruppe von einem oder mehreren Multiplexeranschlüssen aufweist, welche an die zweite Gruppe von einem oder mehreren Anschlüssen des gemeinsam genutzten Speichers gekoppelt sind; und
wobei die Rechnerschaltung beinhaltet:
Anweisungsausführungsrechnerkerne (220), die jeweils an die erste Gruppe von Multiplexeranschlüssen gekoppelt sind, und eine oder mehrere konfigurierbare Beschleunigungseinrichtungen (250), die an den Nachrichteneingangsbus, den Nachrichtenausgangsbus und an die erste Gruppe von einem oder mehreren Anschlüssen des gemeinsam genutzten Speichers gekoppelt sind.

6. Clusterschaltung nach Anspruch 1, ferner umfassend:
eine Speicherschaltung (230), die einen gemeinsam genutzten Speicher beinhaltet, der aufweist: eine erste Gruppe von einem oder mehreren Anschlüssen des gemeinsam genutzten Speichers, die an den Nachrichteneingangsbus (204) und den Nachrichtenausgangsbus (202) gekoppelt sind, eine zweite Gruppe von Anschlüssen des gemeinsam genutzten Speichers, und eine dritte Gruppe von einem oder mehreren Anschlüssen des gemeinsam genutzten Speichers; und
wobei die Rechnerschaltung beinhaltet
Anweisungsausführungsrechnerkerne (220), die jeweils an die zweite Gruppe von Anschlüssen des gemeinsam genutzten Speichers gekoppelt sind, und
eine oder mehrere konfigurierbare Beschleunigungseinrichtungen (250), die jeweils an die dritte Gruppe von einem oder mehreren Anschlüssen des gemeinsam genutzten Speichers gekoppelt sind.

7. Clusterschaltung nach Anspruch 1, ferner umfassend:
eine Speicherschaltung, die Anweisungsspeicher (222) beinhaltet, die jeweils einen ersten Anweisungsspeicheranschluss aufweisen, der an den Nachrichteneingangsbus (204) gekoppelt ist, und die jeweils zweite Anweisungsspeicheranschlüsse aufweisen; und
wobei die Rechnerschaltung Anweisungsausführungsrechnerkerne (220) beinhaltet, die jeweils an einen der zweiten Anweisungsspeicheranschlüsse gekoppelt sind.

8. Clusterschaltung nach Anspruch 1, ferner umfassend:
eine Speicherschaltung (230), die einen gemeinsam genutzten Speicher beinhaltet, der erste Anschlüsse des gemeinsam genutzten Speichers aufweist, die an den Nachrichteneingangsbus (204) und an den Nachrichtenausgangsbus (202) gekoppelt sind, und der zweite Anschlüsse des gemeinsam genutzten Speichers aufweist;
eine Multiplexerschaltung (224, 226), die erste Multiplexeranschlüsse aufweist und die zweite Multiplexeranschlüsse aufweist, die an die zweiten Anschlüsse des gemeinsam genutzten Speichers gekoppelt sind;
wobei die Rechnerschaltung beinhaltet
Anweisungsausführungsrechnerkerne (220), die jeweils an die ersten Multiplexer-Anschlüsse gekoppelt sind, und
eine oder mehrere konfigurierbare Beschleunigungseinrichtungen (250), die an die ersten Anschlüsse des gemeinsam genutzten Speichers gekoppelt sind;
wobei die Schnittstellenschaltung (240) dazu eingerichtet ist,
von dem Router (200) eine Indikation (318) zu empfangen, dass sich eine Nachricht (398) für einen oder mehrere der Anweisungsausführungsrechnerkerne auf einem Routerausgangsbus befindet, der an den Nachrichteneingangsbus gekoppelt ist,
ansprechend auf die Indikation zu veranlassen, dass die Nachricht von dem Routerausgangsbus in den Nachrichteneingangsbus eingekoppelt wird, und
zu veranlassen, dass Nutzdaten der Nachricht (398 Daten) an einem Ort des gemeinsam genutzten Speichers gespeichert werden; und
wobei der eine oder die mehreren Anweisungsausführungsrechnerkerne dazu eingerichtet sind, die Nutzdaten von dem Ort des gemeinsam genutzten Speichers abzurufen.

9. Clusterschaltung nach Anspruch 1, ferner umfassend:
eine Speicherschaltung (230), die einen gemeinsam genutzten Speicher beinhaltet, der erste Anschlüsse des gemeinsam genutzten Speichers aufweist, die an den Nachrichteneingangsbus (204) und an den Nachrichtenausgangsbus (202) gekoppelt sind, und der zweite Anschlüsse des gemeinsam genutzten Speichers aufweist;
eine Multiplexerschaltung (224, 226), die erste Multiplexeranschlüsse aufweist und die zweite Multiplexeranschlüsse aufweist, welche an die zweiten Anschlüsse des gemeinsam genutzten Speichers gekoppelt sind;
wobei die Rechnerschaltung beinhaltet
Anweisungsausführungsrechnerkerne (220), die jeweils an die ersten Multiplexeranschlüsse gekoppelt sind, und
eine oder mehrere konfigurierbare Beschleunigungseinrichtungen (250), die an die ersten Anschlüsse des gemeinsam genutzten Speichers gekoppelt sind;
wobei die Schnittstellenschaltung (240) dazu eingerichtet ist,
von dem Router (200) eine Indikation (318) zu empfangen, dass sich eine Nachricht (398) für eine oder mehrere der konfigurierbaren Beschleunigungseinrichtungen auf einem Routerausgangsbus befindet, der an den Nachrichteneingangsbus gekoppelt ist,
ansprechend auf die Indikation zu veranlassen, dass die Nachricht von dem Routerausgangsbus in den Nachrichteneingangsbus eingekoppelt wird, und
wobei der eine oder die mehreren der konfigurierbaren Beschleunigungseinrichtungen dazu eingerichtet sind, die Nutzdaten von dem Nachrichteneingangsbus abzurufen.

10. Clusterschaltung nach Anspruch 1, wobei eines oder mehrere der folgenden Elemente, und zwar der Nachrichteneingangsbus (204), der Nachrichtenausgangsbus (204), die Rechnerschaltung (220, 222, 224, 226, 230, 250) und die Schnittstellenschaltung (240), auf einer vor Ort programmierbaren Gatter-Anordnung - FPGA - (102) realisiert sind.

11. Clusterschaltung nach Anspruch 1, wobei der Nachrichteneingangsbus (204) an den zur ersten Dimension gehörigen Ausgangsbus (310) der Routerschaltung (200) oder den zur zweiten Dimension gehörigen Ausgangsbus (312) der Routerschaltung gekoppelt ist.

12. Clusterschaltung nach Anspruch 1, wobei die Rechnerschaltung eine Mehrzahl von Anweisungsausführungsrechnerkernen (220) beinhaltet, die an eine Mehrzahl von Speicheranschlüssen eines Speichers (230) für im Cluster gemeinsam genutzte Daten gekoppelt ist, und zwar durch eine oder mehrere der folgenden Verbindungen, und zwar eine Direktverbindungs-, eine Zeitmultiplex-, eine Busmultiplex- (224), eine Kreuzschienen- (226), und eine Ring-Verbindung.

13. Clusterschaltung nach Anspruch 1, wobei die Routerschaltung auf einem FPGA (102) realisiert ist, und wobei eine Dualausgangszuordnungstabelle des FPGA dazu eingerichtet ist, eine Eingabe von einem Bit an dem zur ersten Dimension gehörigen Eingang (302) des Routers, von einem Bit an dem zur zweiten Dimension gehörigen Eingang (304), und von einem Bit an dem Client-Eingang (306) durchzuführen, und ferner dazu eingerichtet ist, eine Ausgabe von einem Bit an dem zur ersten Dimension gehörigen Ausgang (310) und von einem Bit an dem zur zweiten Dimension gehörigen Ausgang (312) durchzuführen.

14. Clusterschaltung nach Anspruch 5, wobei ein Anweisungsspeicher (222) in einem Dualanschluss-Block-RAM eines FPGA realisiert ist, der dazu eingerichtet ist, dass ein zum ersten Anschluss gehöriger Datenschreibbus des Block-RAM an den Nachrichteneingangsbus (204) gekoppelt ist, und dass zum ersten und zweiten Anschluss gehörige Datenlesebusse des Block-RAM jeweils an erste und zweite Anweisungsausführungsrechnerkerne (220) gekoppelt sind.

15. Clusterschaltung nach Anspruch 4, wobei ein Block-RAM-Speicher eines FPGA eine Dualanschlussbank des gemeinsam genutzten Speichers (230) implementiert, der einen ersten Anschluss des gemeinsam genutzten Speichers und einen zweiten Anschluss des gemeinsam genutzten Speichers beinhaltet.

16. Clusterschaltung nach Anspruch 1, wobei die Routerschaltung (200) ferner dazu eingerichtet ist, eine Nachricht zu einem zweiten Routerausgabeanschluss umzuleiten, und zwar ansprechend auf eine Routerausgabeanschluss-Konkurrenz.

## Revendications

1. Circuit de regroupement (210), comprenant :
un bus d'entrée de message (204) configuré pour être couplé à un circuit de routeur (200) qui constitue une partie d'un réseau d'interconnexion de puce de circuit intégré (150) ;
un bus de sortie de message (202) configuré pour être couplé au circuit de routeur ;
un circuit de calcul (220, 222, 224, 226, 230, 250) ; et
un circuit d'interface (240) couplé au circuit de calcul, au bus d'entrée de message, et au bus de sortie de message, et configuré
pour recevoir, en provenance du circuit de calcul, une requête d'envoi d'un message qui comporte des données de charge utile,
pour générer, en réponse à la requête, un message (398) qui comporte un indicateur de destination (398 x,y) et les données de charge utile (398 data), et
pour imposer que le message soit fourni sur le bus de sortie de message,
**caractérisé en ce que**
le réseau (150) est configuré sous forme d'un réseau d'interconnexion en tore directionnel à deux dimensions,
le circuit de routeur est configuré pour être couplé dans un anneau unidirectionnel d'une première dimension du réseau par un bus de sortie de la première dimension (310) du circuit de routeur couplé à un bus d'entrée de la première dimension (302) d'un autre circuit de routeur dans l'anneau unidirectionnel de la première dimension, et un bus d'entrée de la première dimension (302) du circuit de routeur couplé à un bus de sortie de la première dimension (310) d'un autre circuit de routeur dans l'anneau unidirectionnel de la première dimension, et
le circuit de routeur est configuré pour être couplé dans un anneau unidirectionnel d'une deuxième dimension du réseau par un bus de sortie de la deuxième dimension (312) du circuit de routeur couplé à un bus d'entrée de la deuxième dimension (304) d'un autre circuit de routeur dans l'anneau unidirectionnel de la deuxième dimension, et un deuxième bus d'entrée de dimension (304) du circuit de routeur couplé à un bus de sortie de la deuxième dimension (310) d'un autre circuit de routeur dans l'anneau unidirectionnel de la deuxième dimension.

2. Circuit de regroupement selon la revendication 1, dans lequel le circuit de calcul comporte un ou plusieurs coeurs de calcul exécutant des instructions (220).

3. Circuit de regroupement selon la revendication 1, dans lequel le circuit de calcul comporte un ou plusieurs circuits parmi un circuit d'accélérateur de non exécution d'instructions (250), ou un circuit d'accélérateur configurable (250), ou un circuit reconfigurable d'exécution.

4. Circuit de regroupement selon la revendication 1, comprenant en outre :
un circuit de mémoire couplé au bus de sortie de message ;
dans lequel le circuit d'interface est en outre configuré
pour recevoir, en provenance du circuit de calcul en tant que partie de la requête d'envoi d'un message, une adresse d'un emplacement dans le circuit de mémoire au niveau duquel la charge utile est stockée, et une destination de la charge utile,
pour générer l'indicateur de destination comportant l'indicateur de destination (398 x,y) de la charge utile, et
pour imposer que le message (398) soit placé sur le bus de sortie de message en fournissant l'indicateur de destination sur le bus de sortie de message, et en forçant le circuit de mémoire à fournir les contenus de l'emplacement sur le bus de sortie de message.

5. Circuit de regroupement selon la revendication 1, comprenant en outre :
un circuit de mémoire comportant une mémoire partagée ayant un premier groupe d'un ou de plusieurs ports de mémoire partagée couplé au bus d'entrée de message et au bus de sortie de message, et ayant un deuxième groupe d'un ou de plusieurs ports de mémoire partagée ;
un circuit de multiplexage ayant un premier groupe de ports multiplexeurs, et ayant un deuxième groupe d'un ou de plusieurs ports multiplexeurs couplé au deuxième groupe desdits un ou plusieurs ports de mémoire partagée ; et
dans lequel le circuit de calcul comporte des coeurs de calcul d'exécution d'instructions (220) couplés respectivement aux premiers ports multiplexeurs, et un ou plusieurs accélérateurs configurables (250) couplés au bus d'entrée de message, au bus de sortie de message, et au premier groupe desdits un ou plusieurs ports de mémoire partagée.

6. Circuit de regroupement selon la revendication 1, comprenant en outre :
un circuit de mémoire (230) comportant une mémoire partagée ayant un premier groupe d'un ou de plusieurs ports de mémoire partagée couplé au bus d'entrée de message (204) et au bus de sortie de message (202), ayant un deuxième groupe de ports de mémoire partagée, et ayant un troisième groupe d'un ou de plusieurs ports de mémoire partagée ; et
dans lequel le circuit de calcul comporte :
des coeurs de calcul d'exécution d'instructions (220) couplés respectivement au deuxième groupe de ports de mémoire partagée, et
un ou plusieurs accélérateurs configurables (250) couplés respectivement au troisième groupe desdits un ou plusieurs ports de mémoire partagée.

7. Circuit de regroupement selon la revendication 1, comprenant en outre :
un circuit de mémoire comportant des mémoires d'instructions (220) ayant chacune un premier port de mémoire d'instructions respectif couplé au bus d'entrée de message (204), et ayant chacune des deuxièmes ports de mémoire d'instructions ; et
dans lequel le circuit de calcul comporte des coeurs de calcul d'exécution d'instructions (220) couplés chacun à un port respectif parmi les deuxièmes ports de mémoire d'instructions.

8. Circuit de regroupement selon la revendication 1, comprenant en outre :
un circuit de mémoire (230) comportant une mémoire partagée ayant des premiers ports de mémoire partagée couplés au bus d'entrée de message (204) et au bus de sortie de message (202), et ayant des deuxièmes ports de mémoire partagée ;
un circuit de multiplexage (224, 226) ayant des premiers ports multiplexeurs, et ayant des deuxièmes ports multiplexeurs couplés aux deuxièmes ports de mémoire partagée ;
dans lequel le circuit de calcul comporte
des coeurs de calcul d'exécution d'instructions (220) couplés respectivement aux premiers ports multiplexeurs, et
un ou plusieurs accélérateurs configurables (250) couplés aux premiers ports multiplexeurs ;
dans lequel le circuit d'interface (240) est configuré
pour recevoir, en provenance du routeur (200), une indication (318) qu'un message (398) pour un ou plusieurs des coeurs de calcul d'exécution d'instructions est sur un bus de sortie de routeur qui est couplé au bus d'entrée de message,
en réponse à l'indication, pour imposer que le message soit couplé depuis le bus de sortie de routeur au bus d'entrée de message, et
pour imposer qu'une charge utile du message (398 data) soit stockée en un emplacement de la mémoire partagée ; et
dans lequel lesdits un ou plusieurs coeurs de calcul d'exécution d'instructions sont configurés pour récupérer la charge utile à partir de l'emplacement de la mémoire partagée.

9. Circuit de regroupement selon la revendication 1, comprenant en outre :
un circuit de mémoire (230) comportant une mémoire partagée ayant des premiers ports de mémoire partagée couplés au bus d'entrée de message (204) et au bus de sortie de message (202), et ayant des deuxièmes ports de mémoire partagée ;
un circuit de multiplexage (224, 226) ayant des premiers ports multiplexeurs, et ayant des deuxièmes ports multiplexeurs couplés aux deuxièmes ports de mémoire partagée ;
dans lequel le circuit de calcul comporte
des coeurs de calcul d'exécution d'instructions (220) couplés respectivement aux premiers ports multiplexeurs, et
un ou plusieurs accélérateurs configurables (250) couplés aux premiers ports de mémoire partagée ;
dans lequel le circuit d'interface (240) est configuré :
pour recevoir, en provenance du routeur (200), une indication (318) qu'un message (398) pour un ou pour plusieurs des accélérateurs configurables est sur un bus de sortie de routeur qui est couplé au bus d'entrée de message,
en réponse à l'indication, pour imposer que le message soit couplé depuis le bus de sortie de routeur au bus d'entrée de message ; et
dans lequel lesdits un ou plusieurs accélérateurs configurables sont configurés pour récupérer la charge utile à partir du bus d'entrée de message.

10. Circuit de regroupement selon la revendication 1, dans lequel un ou plusieurs éléments parmi le bus d'entrée de message (204), le bus de sortie de message (204), le circuit de calcul (220, 222, 224, 226, 230, 250), et le circuit d'interface (240) sont instanciés sur un réseau de portes programmable par champ (102).

11. Circuit de regroupement selon la revendication 1, dans lequel le bus d'entrée de message (204) est couplé au bus de sortie de la première dimension (310) du circuit de routeur (200) ou au bus de sortie de la deuxième dimension (312) du circuit de routeur.

12. Circuit de regroupement selon la revendication 1, dans lequel le circuit de calcul comporte une pluralité de coeurs de calcul d'exécution d'instructions (220) couplés à une pluralité de ports de mémoire sur une mémoire de données partagées de regroupement (230) par un ou plusieurs éléments parmi des multiplexeurs de bus, à multiplexage par répartition en temps, à connexion directe (224), une barre transversale (226) et des interconnexions d'anneau.

13. Circuit de regroupement selon la revendication 1, dans lequel le circuit de routeur est instancié sur un réseau de portes programmable par champ (102), et dans lequel une table de vérité à sortie double du réseau de portes programmable par champ est configurée pour entrer un bit sur l'entrée de la première dimension du routeur (302), un bit sur l'entrée de la deuxième dimension (304), et un bit sur l'entrée de client (306), et est en outre configuré pour fournir un bit sur la sortie de la première dimension (310) et un bit sur la sortie de la deuxième dimension (312) .

14. Circuit de regroupement selon la revendication 5, dans lequel une mémoire d'instructions (222) est instanciée dans une RAM en bloc à deux ports d'un réseau de portes programmable par champ, configurée avec un premier bus de données d'écriture de port couplé au bus d'entrée de message (204), et avec des premier et deuxième bus de données de lecture de ports de la RAM en bloc couplée aux premier et deuxième coeurs de calcul d'exécution d'instructions (220), respectivement.

15. Circuit de regroupement selon la revendication 4, dans lequel une mémoire RAM en bloc d'un réseau de portes programmable par champ met en oeuvre une banque à deux ports de la mémoire partagée (230) comportant un premier port de mémoire partagée et un deuxième port de mémoire partagée.

16. Circuit de regroupement selon la revendication 1, dans lequel le circuit de routeur (200) est en outre configuré pour dévier un message vers un deuxième port de sortie en réponse à une congestion de port de sortie de routeur.
